(19) Europäisches Patentamt
European Patent Office
Office européen des brevets

(11) EP 2 238 176 B1

(12) **EUROPÄISCHE PATENTSCHRIFT**

(45) Veröffentlichungstag und Bekanntmachung des Hinweises auf die Patenterteilung:
**20.08.2014 Patentblatt 2014/34**

(21) Anmeldenummer: **09706333.3**

(22) Anmeldetag: **16.01.2009**

(51) Int Cl.:
***C08C 1/15*** *(2006.01)* ***C08F 236/12*** *(2006.01)*

(86) Internationale Anmeldenummer:
**PCT/EP2009/050465**

(87) Internationale Veröffentlichungsnummer:
**WO 2009/095317 (06.08.2009 Gazette 2009/32)**

(54) **OPTIONAL ALKYLTHIO-ENDGRUPPEN ENTHALTENDE OPTIONAL HYDRIERTE NITRILKAUTSCHUKE**

NITRILE RUBBERS WHICH OPTIONALLY CONTAIN ALKYLTHIO TERMINAL GROUPS AND WHICH ARE OPTIONALLY HYDROGENATED

CAOUTCHOUCS NITRILE OPTIONNELLEMENT HYDROGÉNÉS CONTENANT OPTIONNELLEMENT DES TERMINAISONS ALKYLTHIO

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **29.01.2008 EP 08150757**

(43) Veröffentlichungstag der Anmeldung:
**13.10.2010 Patentblatt 2010/41**

(73) Patentinhaber: **LANXESS Deutschland GmbH**
**50569 Köln (DE)**

(72) Erfinder:
- **OBRECHT, Werner**
  **47447 Moers (DE)**
- **JOSTEN, Rolf**
  **41469 Neuss (DE)**
- **KLIMPEL, Michael**
  **F-67760 Gambsheim (FR)**

(56) Entgegenhaltungen:
**EP-A- 0 779 301** **EP-A- 1 857 491**
**WO-A-2008/142039** **WO-A-2008/142042**
**DE-A1-102004 013 008** **US-A- 4 647 652**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 238 176 B1

## Beschreibung

Die Erfindung betrifft einen Nitrilkautschuk, ein Verfahren zu dessen Herstellung, vulkanisierbare Mischungen auf Basis dieses Nitrilkautschuks, ferner ein Verfahren zur Herstellung von Vulkanisaten aus diesen Mischungen sowie die dabei erhaltenen Vulkanisate.

Unter Nitrilkautschuken, abgekürzt auch als "NBR" bezeichnet, werden Kautschuke verstanden, bei denen es sich um Co- oder Terpolymere aus mindestens einem $\alpha,\beta$-ungesättigten Nitril, mindestens einem konjugierten Dien und gegebenenfalls einem oder mehreren weiteren copolymerisierbaren Monomeren handelt.

Derartige Nitrilkautschuke und Verfahren zur Herstellung solcher Nitrilkautschuke sind bekannt, siehe z.B. W. Hofmann, Rubber Chem. Technol. 36 (1963) 1 und Ullmann's Encyclopedia of Industrial Chemistry, VCH Verlagsgesellschaft, Weinheim, 1993, S. 255-261.

Nitrilkautschuke werden in den verschiedensten Anwendungsgebieten eingesetzt, beispielsweise für Dichtungen, Schläuche, Ventildichtungen und Dämpfungselemente im Automobilsektor, ferner für Schläuche, Statoren und Bohrlochdichtungen im Bereich der Ölförderung sowie auch für zahlreiche Teile der Luftfahrtindustrie, der Elektroindustrie, des Maschinen- und des Schiffsbaus. Für verschiedene Einsatzformen ist es wichtig, dass die Nitrilkautschuke keine nachteiligen Auswirkungen wie z.B. Korrosion auf die Bauteile haben, mit denen sie in Kontakt kommen. Dies gilt insbesondere für solche Gummiteile, die einerseits in Kontakt mit Wasser, wassserhaltigen Lösungsmitteln und Kraftstoffen sowie Wasserdampf und andererseits in Kontakt mit Metallen oder metallhaltigen Bauteilen stehen bzw. kommen. Dies sind insbesondere Dichtungen, Schläuche und Membranen. Entsprechende Gummiartikel sind: O-Ringe und Flachdichtungen, Kühlerschläuche, Servolenkschläuche, Klimaanlagenschläuche, Thermoisolierschläuche und Membranen beispielsweise für Hydrolager oder Membranpumpen.

NBR wird durch Emulsionspolymerisation hergestellt, wobei zunächst ein NBR-Latex erhalten wird. Der NBR-Feststoff wird aus diesem Latex durch Koagulation isoliert. Für die Durchführung dieser Koagulation gibt es die unterschiedlichsten Varianten. Für die Koagulation werden üblicherweise Salze und Säuren verwendet. Meistens besteht das erklärte Ziel darin, die ElektrolytMengen möglichst gering zu halten.

Über die Koagulation von Latices mit Metallsalzen ist bekannt, dass von einwertigen Metallionen, z.B. in Form von Natriumchlorid, deutlich größere Elektrolytmengen benötigt werden als von mehrwertigen Metallionen, z.B. in Form von Calciumchlorid, Magnesiumchlorid oder Aluminiumsulfat (Kolloid-Z. 154, 154 (1957)). Es ist ferner bekannt, dass der Einsatz mehrwertiger Metallionen zu "einem mehr oder weniger großen Einschluss des Emulgators im Produkt" führt (Houben-Weyl (1961), Methoden der Org. Chemie, Makromolekulare Stoffe 1, S. 484). Gemäß Houben-Weyl (1961), Methoden der Org. Chemie, Makromolekulare Stoffe 1, S. 479 "müssen nicht nur die benutzten Elektrolyte sehr sorgfältig wieder ausgewaschen werden, sondern das Fertigprodukt soll auch frei von den Katalysatoren und Emulgatoren des Ansatzes sein. Schon geringe Reste von Elektrolyten ergeben trübe und wolkige Press- und Spritzstücke, verderben die elektrischen Eigenschaften und erhöhen das Wasseraufuahmevermögen des Fertigprodukts" (Zitat). Genauere Angaben über Art und Menge der Verunreinigungen solcher Nitrilkautschuke und deren Auswirkung auf die Eigenschaften von Formkörpern aus Nitrilkautschuk im Kontakt mit anderen Bauteilen fehlen.

Aus DD 154 702 ist ein Verfahren zur radikalischen Copolymerisation von Butadien und Acrylnitril in Emulsion bekannt, das über ein spezielles, zweckmäßigerweise computergestütztes Dosierprogramm für die Monomere sowie den Molekulargewichtsregler, wie z.B. tert.-Dodecylmercaptan, gesteuert wird und bei dem die erhaltenen Latices durch Koagulation im sauren Medium zum Festkautschuk aufgearbeitet werden. Als wesentlicher Vorteil des Verfahrens wird ausgeführt, dass die als Emulgatoren eingesetzten Harz- und/oder Fettsäureseifen durch die Verwendung von Säuren bei der Koagulation im Kautschuk verbleiben, also nicht wie bei anderen Verfahren ausgewaschen werden. Hierfür wird neben dem Vorteil guter Eigenschaften des NBR besonders die Verbesserung der Ökonomie des Verfahrens und die Vermeidung der Abwasserbelastung durch ausgewaschenen Emulgator reklamiert. Für die erhaltenen Butadien-Acrylnitril-Copolymerisate mit 10-30 Gew.% Acrylnitril wird ausgeführt, dass sie sich durch gute Elastizitäts- und Tieftemperatur-Eigenschaften kombiniert mit einer erhöhten Quellbeständigkeit und eine vorteilhafte Verarbeitbarkeit auszeichnen. Es werden keine Angaben über die Art und Menge der Verunreinigungen dieser Nitrilkautschuke gemacht. Auch finden sich in DD 154 702 keine Angaben über die Metallkorrosivität der mit diesen Nitrillcautschuken hergestellten Vulkanisate.

Gemäß JP 27902/73 (Appl. 69 32,322) wird die Koagulation mit Magnesium-Salzen in Gegenwart von Aminen durchgeführt. Eingesetzt wird beispielsweise die Kombination von Diethylentriamin und Magnesiumchlorid.

Aus der DE-OS 23 32 096 ist es bekannt, dass Kautschuke aus ihren wässrigen Dispersionen mit Hilfe von Methylcellulose und einem wasserlöslichen Alkali-, Erdalkali-, Aluminium- oder Zinksalz ausgefällt werden können. Als bevorzugtes wasserlösliches Salz wird Natriumchlorid eingesetzt. Als Vorteil dieses Verfahrens wird beschrieben, dass ein Koagulat erhalten wird, welches von Fremdbestandteilen, wie Emulgatoren, Katalysatorresten und dergleichen fast vollständig frei ist, da diese Fremdstoffe zusammen mit dem Wasser beim Abtrennen des Koagulats entfernt und etwa noch verbleibende Reste mit weiterem Wasser vollständig ausgewaschen werden. In der DE-OS 24 25 441 werden bei der Elektrolytkoagulation von Kautschuklatices als Hilfsmittel statt der Methylcellulose 0,1-10 Gew.% (bezogen auf den Kautschuk) wasserlösliche $C_2$-$C_4$ Alkylcellulosen oder Hydroxyalkylcellulosen in Kombination mit 0,02 bis 10 Gew.%

(bezogen auf den Kautschuk) eines wasserlöslischen Alkali-, Erdalkali-, Aluminium- oder Zinksalzes verwendet. Auch hier wird als bevorzugtes wasserlösliches Salz Natriumchlorid eingesetzt. Das Koagulat wird mechanisch abgetrennt, gegebenenfalls mit Wasser gewaschen und das restliche Wasser entzogen. Auch hier wird ausgeführt, dass die Fremdstoffe wie in der DE-OS 23 32 096 zusammen mit dem Wasser beim Abtrennen des Koagulats faktisch vollständig entfernt werden und etwa noch verbleibende Reste durch das Waschen mit weiterem Wasser vollständig ausgewaschen werden. Es werden keine Angaben über die Restmengen der Verunreinigungen in diesen Nitrilkautschuken gemacht. Ferner finden sich weder in DE-OS 23 32 096 noch in DE-OS 24 25 441 Angaben über die Auswirkungen etwaiger Verunreinigungen auf die Eigenschaft der Metallkorrosivität der mit diesen Nitrilkautschuken hergestellten Vulkanisate.

In US-A-5,708,132 wird ein Verfahren zur Aufarbeitung von Nitrilkautschuklatices beschrieben, der eine verbesserte Lagerstabilität (70°C/28 Tage) und eine höhere Ausvulkanisationsgeschwindigkeit (TC90) aufweist. Für die Latexkoagulation werden Mischungen von Salzen und Säuren, insbesondere Schwefelsäure eingesetzt. Das Verfahren zeichnet sich durch die Einhaltung eines engen pH-Bereichs bei der Krümelwäsche aus, wobei der pH-Wert des Waschwassers im Bereich 5 bis 8, bevorzugt 5,5 bis 7,5, besonders bevorzugt 6 bis 7 liegt. Zur pH-Einstellung werden Calciumhydroxid, Magnesiumhydroxid und Natriumhydroxid verwendet, wobei die Verwendung von Natriumhydroxid bevorzugt ist. Zur Stabilisierung des Nitrilkautschuks wird ein Alterungsschutzmittel auf der Basis von alkylierten Arylphosphiten, insbesondere von alkylierten Arylphosphiten in Kombination mit sterisch gehinderten Phenolen verwendet. Nach der Wäsche werden die Kautschukkrümel in einem Schneckenaggreagat auf Restfeuchten von 7 bis 10 Gew. % entwässert und anschließend thermisch getrocknet.

In DE-OS 27 51 786 wird festgestellt, dass die Ausfällung und Isolierung von Kautschuken aus ihren wässrigen Dispersionen mit einer geringeren Menge an **(Hydroxy)Alkylcellulose** durchgeführt werden kann, wenn 0,02 bis 0,25 Gew.% eines wasserlöslichen **Calciumsalzes** eingesetzt werden. Es wird wiederum als Vorteil beschrieben, dass nach diesem Verfahren ein extrem reines Koagulat erhalten wird, welches von Fremdbestandteilen, wie Emulgatoren, Katalysatoresten und dergleichen faktisch vollständig frei ist. Diese Fremdstoffe werden zusammen mit dem Wasser beim Abtrennen des Koagulats entfernt und etwa noch verbleibende Reste können mit Wasser ausgewaschen werden. Es wird ferner ausgeführt, dass die Eigenschaften der isolierten Kautschuke nicht nachteilig dadurch beeinflusst werden, dass mit einem Calcium-Salz koaguliert wird. Man erhalte vielmehr einen Kautschuk, bei dem die Vulkanisateigenschaften nicht beeinträchtigt und voll zufriedenstellend seien. Dies wird als überraschend dargestellt, da eine Beeinträchtigung der Kautschukeigenschaften häufig zu beobachten sei, wenn Polymere aus Dispersionen mit Hilfe mehrwertiger Metallionen wie Calcium- oder Aluminium-Ionen ausgefällt würden. Als Beleg für die letztere Aussage wird Houben-Weyl (1961), Methoden der Org. Chemie, Makromolekulare Stoffe 1, S. 484/485 herangezogen. Die Kautschuke der DE-OS 27 51 786 wiesen demgegenüber keinerlei Verzögerung oder Verschlechterung z.B. bei der Anvulkanisation und/oder Ausvulkanisation auf. Es werden keine Angaben über die Restmengen der Verunreinigungen in diesen Nitrilkautschuken gemacht. Über die etwaigen Auswirkungen solcher Verunreinigungen finden sich in DE-OS 27 51 786 ebenfalls keine Informationen.

Wie bei den zuvor beschriebenen Patenten ist es auch das Ziel der DE-OS 30 43 688**,** die für die Latexkoagulation nötigen Elektrolytmengen möglichst stark zu reduzieren. Dies wird gemäß der Lehre der DE-OS 30 43 688 erreicht, indem man bei der Elektrolytkoagulation von Latices neben dem anorganischen Coagulans als Hilfsmittel entweder auf Pflanzen zurückgehende proteinartige Materialien oder Polysaccharide wie z.B. Stärke und gegebenenfalls wasserlösliche Polyaminverbindungen verwendet. Als anorganische Coagulantien werden bevorzugt Alkalimetall- oder Erdalkalimetallsalze beschrieben. Durch die speziellen Additive gelingt eine Reduktion der für eine quantitative Latexkoagulation notwendigen Salzmengen. Es werden keine Angaben über die Restmengen der Verunreinigungen in diesen Nitrilkautschuken gemacht. Es fehlen ferner Angaben zu den Auswirkungen solcher Verunreinigungen in Vulkanisaten auf Basis dieser Nitrilkautschuke.

Gemäß US-A-2,487,263 wird die Latexkoagulation von Styrol/Butadien-Kautschuken nicht unter Einsatz von Metallsalzen durchgeführt, sondern mit Hilfe einer Kombination von Schwefelsäure mit Gelatine ("glue"). Menge und Konzentration der Schwefelsäure sind dabei so zu wählen, dass der pH des wässrigen Mediums auf einen Wert < 6 eingestellt wird. Als vorteilhaft wird ausgeführt, dass sich bei der Latexkoagulation diskrete, nicht zusammenhängende Kautschukkrümel bilden, die gut abfiltriert werden können und sich gut waschen lassen. Styrol/Butadien-Kautschuk, der nach der Lehre von US-A-2,487,263 erhalten wird, weist ein geringeres Wasserabsorptionsvermögen, einen niedrigeren Aschegehalt und einen höheren elektrischen Widerstand als Kautschuke auf, die mit Hilfe von Salzen ohne Gelatinezusatz koaguliert werden. US-A-2,487,263 enthält keinerlei Offenbarung, welche Auswirkungen die Koagulation mit Schwefelsäure unter Gelatinezusatz auf Lagerstabilität, Vulkanisationsgeschwindigkeit und Vulkanisateigenschaften und insbesondere auf das Modulniveau von Kautschuken sowie auf die Frage der Metallkorrosivität entsprechender Vulkanisate besitzt.

In der US-A-4,920,176 wird beschrieben und durch experimentelle Daten belegt, dass bei Koagulation eines Nitrilkautschuk-Latex gemäß dem Stand der Technik unter Einsatz anorganischer Salze wie Natriumchlorid oder Calciumchlorid sehr hohe Natrium-, Kalium- und Calcium-Gehalte und auch deutliche Mengen an Emulgator im Nitrilkautschuk verbleiben. Dies ist unerwünscht und zwecks Erhalt eines möglichst reinen Nitrilkautschuks werden gemäß US-A-4,920,176 bei der Koagulation von Nitrilkautschuk-Latices anstelle der anorganischen Salze wasserlösliche kationische Polymere eingesetzt. Bei diesen handelt es sich beispielsweise um solche auf der Basis von Epichlorhydrin und Dimethylamin. Die daraus erhaltenen Vulkanisate weisen eine niedrigere Quellung bei Wasserlagerung sowie einen höheren elektrischen Widerstand auf. In der Patentschrift werden die genannten Eigenschaftsverbesserungen rein qualitativ auf die minimalen, im Produkt verbleibenden Kationengehalte zurückgeführt. Eine weitergehende Erklärung der beobachteten Phänomene wird nicht gegeben.

Das Ziel der EP-A-1 369 436 besteht darin, Nitrilkautschuke mit hoher Reinheit bereitzustellen. Zur Herstellung der Nitrilkautschuke wird die Emulsionspolymerisation in Gegenwart von Fettsäure- und/oder Harzsäuresalzen als Emulgatoren durchgeführt, danach die Latexkoagulation durch Säurezusatz bei pH Werten kleiner gleich 6 vorgenommen, gegebenenfalls unter Zugabe von Fällungsmitteln. Als Säuren können alle mineralischen und organischen Säuren verwendet werden, die es gestatten, den gewünschten pH-Wert einzustellen. Als zusätzliche Fällungsmittel können beispielsweise Alkalisalze von anorganischen Säuren eingesetzt werden. Erwähnt wird ferner, dass auch Fällungshilfsmittel wie Gelatine, Polyvinylalkohol, Cellulose, carboxylierte Cellulose und kationische sowie anionische Polyelektrolyte oder deren Mischungen zugesetzt werden können. Anschließend werden die dabei entstandenen Fett- und Harzsäuren mit wässrigen Alkalihydroxidlösungen ausgewaschen und das Polymer abschließend einer Scherung unterworfen, bis sich eine Restfeuchte von kleiner gleich 20 % einstellt. Erhalten werden Nitrilkautschuke mit sehr geringen Restemulgatorgehalten sowie geringen Kationengehalten (Natrium-, Kalium-, Magnesium- und Calcium-Gehalte). Die Chloridgehalte der in den beiden Beispielen beschriebenen Nitrilkautschuke betragen 90 ppm und 111 ppm. Die EP-A-1 369 436 liefert keine Hinweise zur gezielten Herstellung von Nitrilkautschuken. Insbesondere enthält EP-A-1 369 436 keinerlei Anhaltspunkte dafür, durch welche Faktoren die Vulkanisationsgeschwindigkeit und das Eigenschaftsprofil der zugehörigen Vulkanisate, inbesondere deren Metallkorrosivität beeinflusst werden.

In EP-A-0 692 496**,** EP-A-0 779 301 und EP-A-0 779 300 werden jeweils Nitrilkautschuke auf Basis eines ungesättigten Nitrils und eines konjugierten Diens beschrieben. Gemeinsam ist allen Nitrilkautschuken, dass sie 10-60 Gew.% ungesättigtes Nitril und eine Mooney-Viskosität im Bereich von 15-150 bzw. gemäß EP-A-0 692 496 von 15-65 besitzen und alle mindestens 0,03 mol einer $C_{12}$-$C_{16}$-Alkylthio-Gruppe pro 100 mol Monomer-Einheiten aufweisen, wobei diese Alkylthiogruppe mindestens drei tertiäre C-Atome einschließt und ein Schwefel-Atom, das direkt an mindestens eines der tertiären C-Atome gebunden ist.

Die Herstellung der Nitrilkautschuke erfolgt jeweils in Gegenwart eines entsprechend aufgebauten $C_{12}$-$C_{16}$-Alkylthiols als Molekulargewichtsregler, der als "Chain transfer agent" fungiert und somit als Endgruppe in die Polymerketten eingebaut wird.

Für die Nitrilkautschuke gemäß EP-A-0 779 300 wird ausgeführt, dass sie eine Breite "$\Delta$AN" (AN steht für Acrylnitril) der Zusammensetzungsverteilung des ungesättigten Nitrils im Copolymer im Bereich von 3 bis 20 besitzen. Das Verfahren zu ihrer Herstellung unterscheidet sich von dem der EP-A-0 692 496 dadurch, dass nur 30-80 Gew. % der gesamten Monomermenge zu Polymerisationsbeginn eingesetzt werden und die restliche Monomermenge erst bei einem Umsatz der Polymerisation von 20-70 Gew.% zudosiert wird.

Für die Nitrilkautschuke gemäß EP-A-0 779 301 wird ausgeführt, dass sie 3-20 Gew. % einer Fraktion mit niedrigem Molekulargewicht mit einem zahlenmittleren Molekulargewicht $M_n$ kleiner 35.000 aufweisen. Das Verfahren zu ihrer Herstellung unterscheidet sich von dem der EP-A-0 692 496 dadurch, dass nur 10-95 Gew. % des Alkylthiols vor der Polymerisation in das Monomerengemisch eingemischt werden und die restliche Menge des Alkylthiols erst bei Erreichen eines Polymerisationsumsatzes von 20-70 Gew.% zudosiert wird.

Im Hinblick auf die Latex-Koagulation wird in allen drei Patentanmeldungen EP-A-0 692 496**,** EP-A-0 779 301 **und** EP-A-0 779 300 ausgeführt, dass beliebige Coagulantien eingesetzt werden können. Als anorganische Coagulantien werden Calciumchlorid und Aluminiumchlorid erwähnt und eingesetzt. Gemäß EP-A-0 779 301 **und** EP-A-0 779 300 besteht eine bevorzugte Ausführungsform in einem Nitrilkautschuk, der im wesentlichen halogenfrei ist und erhalten wird, indem die Latex-Koagulation in Gegenwart eines nichtionischen oberflächenaktiven Hilfsmittels und unter Verwendung von halogen-freien Metallsalzen wie Aluminiumsulfat, Magnesiumsulfat und Natriumsulfat durchgeführt wird. Als bevorzugt wird die Koagulation unter Einsatz von Aluminiumsulfat oder Magnesiumsulfat angegeben, um den im Wesentlichen halogenfreien Nitrilkautschuk zu erhalten. Der in den Beispielen auf diesem Weg hergestellte Nitrilkautschuk besitzt einen Halogengehalt von maximal 3 ppm. Es wird gezeigt, dass ein solcher Nitrilkautschuk mit 3 ppm Chlorid ein Vulkanisat mit niedriger Metallkorrosivität liefert. Über die Herstellung von Nitrilkautschuken mit höheren Chloridgehalten und die Metallkorrosivität hieraus hergestellter Vulkanisate wird keine Aussage gemacht.

Für die Herstellung der Nitrilkautschuke ist es gemäß EP-A-0 692 496**,** EP-A-0 779 300 sowie EP-A-0 779 301 essentiell, dass als Molekulargewichtsregler Alkylthiole in Form der Verbindungen 2,2,4,6,6-Pentmethylheptan-4-thiol und 2,2,4,6,6,8,8-Heptamethylnonan-4-thiol eingesetzt werden. Es wird darauf hingewiesen, dass bei Einsatz von herkömmlichem tert. Dodecylmercaptan als Regler Nitrilkautschuke mit schlechteren Eigenschaften erhalten werden.

2,2,4,6,6-Pentamethylheptanthiol-4

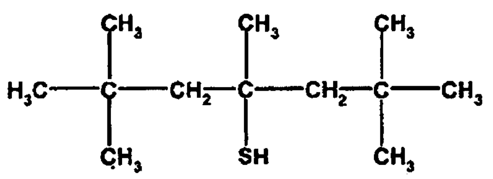

2,2,4,6,6,8,8-Heptamethylnonanthiol-4

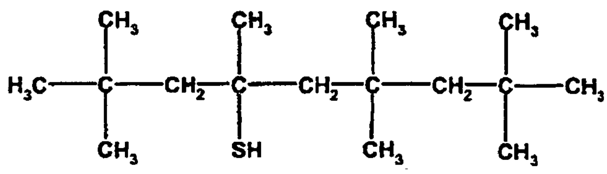

Für die in EP-A-0 692 496, EP-A-0 779 300 sowie EP-A-0 779 301 hergestellten Nitrilkautschuke wird geltend gemacht, dass sie ein vorteilhaftes Eigenschaftsprofl besitzen, eine gute Verarbeitbarkeit der Kautschukmischungen und eine niedrige Formverschmutzung bei der Verarbeitung ermöglichen. Die erhaltenen Vulkanisate sollen eine gute Kombination von Tieftemperatur- und Ölbeständigkeit besitzen und über gute mechanische Eigenschaften verfügen Geltend gemacht wird ferner, dass bei der Herstellung der Nitrilkautschuke durch hohe Polymerisationsumsätze von größer 75%, bevorzugt größer 80% eine hohe Produktivität erzielt werden kann und auch die Vulkanisationsgeschwindigkeit bei der Vulkanisation mit Schwefel bzw. Peroxiden hoch ist, insbesondere bei NBR-Typen für die Spritzgussverarbeitung. Es wird ferner ausgeführt, dass die Nitrilkautschuke eine kurze Anvulkanisationszeit aufweisen und eine hohe Vernetzungsdichte. Als Beleg für die rasche Vulkanisation der gemäß EP-A-0 692 496, EP-A- 0 779 300 **und** EP-A-0 779 301 hergestellten Nitrilkautschuke wird die Anvulkanisationszeit (die sogenannte "Scorch time" (gemessen als "$T_5$")) herangezogen, die allerdings lediglich ein Maß für die Anvulkanisationsgeschwindigkeit darstellt.

In der EP-A-0 692 496 wird hierzu unter anderem angeführt, dass zur Einstellung hoher Vulkanisationsgeschwindigkeiten schon viele Methoden vorgeschlagen wurden, wie z. B. die Verwendung minimaler Mengen an Emulgatoren und Fällmitteln, so dass nur minimale Mengen der Emulgatoren und Fällmittel im NBR verbleiben.

In der DE 102007024011 wird ein schnell vulkanisierender Nitrilkautschuk mit guten mechanischen Eigenschaften, insbesondere einem hohen Modul 300-Niveau, beschrieben, der eine Ionenkennzahl ("IKZ") der allgemeinen Formel (I) im Bereich von 7-26 ppm x mol/g besitzt. Die Ionenkennzahl ist folgendermaßen definiert:

$$\text{Ionenkennzahl} = \frac{3\,c\,(Ca^{2+})}{40\ g/mol} - \left[\frac{c\,(Na^{+})}{23\ g/mol} + \frac{c\,(K^{+})}{39\ g/mol}\right] \qquad (I)$$

wobei $c(C^{2+})$, $c(Na^+)$ und $c(K^+)$ die Konzentration der Calcium-, Natrium- und Kalium-Ionen im Nitrilkautschuk in ppm angibt. Die in den Beispielen genannten, erfindungsgemäß hergestellten Nitrilkautschuke weisen Ca-Ionen-Gehalte im Bereich von 325-620 ppm und Mg-Ionen-Gehalte im Bereich von 14-12 ppm auf. Die nicht erfindungsgemäßen Nitrilkautschuke der Beispiele weisen Ca-Ionen-Gehalte im Bereich 540-1290 ppm und Mg-Ionen-Gehalte von 2-34 ppm auf. Um einen solchen schnell vulkanisierenden Nitrilkautschuk zu erhalten, wird die Koagulation in Gegenwart eines Salzes eines 1-wertigen Metalls und optional maximal 5 Gew.% eines Salzes eines 2-wertigen Metalls durchgeführt und die Temperatur bei Koagulation und nachfolgender Wäsche beträgt mindestens 50°C. In DE 102007024011 werden keine Angaben über eine etwaige Metallkorrosivität der aus diesen Nitrilkautschuken hergestellten Vulkanisate gemacht.

In der DE 102007024008 wird ein besonders lagerstabiler Nitrilkautschuk beschrieben, der 2,2,4,6,6-Pentamethylheptan-4-thio- und/oder 2,4,4,6,6-Pentamethylheptan-2-thio- und/oder 2,3,4,6,6-Pentamethylheptan-2-thio und/oder 2,3,4,6,6-Pentamethylheptan-3-thio-Endgruppen enthält und einen Calcium-Ionen-Gehalt von mindestens 150 ppm, bevorzugt $\geq$ 200 ppm bezogen auf den Nitrilkautschuk, sowie einen Chlor-Gehalt von mindestens 40 ppm, bezogen auf den Nitrilkautschuk, aufweist. Die Ca-Ionen-Gehalte der in den erfindungsgemäßen Beispielen hergestellten Nitrilkautschuke betragen 171 -1930 ppm, die Mg-Gehalte liegen bei 2- 265 ppm. Die Ca-Ionen-Gehalte der nicht erfindungsgemäßen Vergleichsbeispiele betragen 2-25 ppm, die Mg-Ionen-Gehalte 225-350 ppm. Ein solcher lagerstabiler Nitrilkautschuk wird erhalten, wenn man die Latex-Koagulation in Gegenwart mindestens eines Salzes auf Basis von Aluminium, Calcium, Magnesium, Kalium, Natrium oder Lithium durchführt, Koagulation oder Wäsche in Gegenwart eines Ca-Salzes oder von Ca-Ionen haltigem Waschwasser und in Gegenwart eines Cl-haltigen Salzes durchführt. Die Chlorgehalte der erfindungsgemäßen Beispiele liegen im Bereich **49 bis 970** ppm und die der nicht erfindungsgemäßen Vergleichsbeispiele im Bereich **25 bis 39 ppm.** Die niedrigeren Chlorgehalte mit 25 bis 30 ppm werden jedoch nur dann erhalten, wenn mit chloridfreien Fällmitteln wie Magnesiumsulfat, Aluminiumsulfat oder Kaliumaluminiumsulfat koaguliert wird und anschließend mit deionisiertem Wasser gewaschen wird. In DE 102007024008 wird keine Aussage über die Metallkorrosivität derartiger NBR-Vulkanisate gemacht.

In der DE 102007024010 wird ein weiterer schnell vulkanisierender Nitrilkautschuk beschrieben, der eine Ionenkennzahl ("IKZ") der allgemeinen Formel (I) im Bereich von 0 - 60, bevorzugt 10 - 25 ppm x mol/g aufweist,

$$IKZ = 3 \left[\frac{c\,(Ca^{2+})}{40\ g/mol} + \frac{c\,(Mg^{2+})}{24\ g/mol}\right] - \left[\frac{c\,(Na^{+})}{23\ g/mol} + \frac{c\,(K^{+})}{39\ g/mol}\right] \quad (I)$$

wobei $c(Ca^{2+})$, $c(Mg^{2+})$, $c(Na^{+})$ und $c(K^{+})$ die Konzentration der Calcium-, Magnesium-, Natrium- und Kalium-Ionen im Nitrilkautschuk in ppm angibt, und der Mg-Ionen-Gehalt bei 50-250 ppm bezogen auf den Nitrilkautschuk liegt. Bei den Beispielen für die erfindungsgemäß hergestellten Nitrilkautschuke liegt der Ca-Ionen-Gehalt $c(Ca^{2+})$ im Bereich von 163 - 575 ppm und der Mg-Ionen-Gehalt $c(Mg^{2+})$ im Bereich von 57 - 64 ppm. Bei den Beispielen für nicht erfindungsgemäße Nitrilkautschuke liegt der Ca-Ionen-Gehalt $c(Ca^{2+})$ im Bereich von 345 - 1290 ppm und der Mg-Ionen-Gehalt $c(Mg^{2+})$ im Bereich von 2 - 440 ppm. Derartige Nitrilkautschuke erhält man, wenn die Latexkoagulation unter Einhaltung besonderer Maßnahmen durchführt und der Latex vor der Koagulation mit einem Magnesium-Salz auf eine Temperatur von kleiner 45°C eingestellt wird. In DE 102007024010 werden keine Angaben über die Chloridgehalte der bei diesem Verfahren resultierenden Nitrilkautschuke und über die Metallkorrosivität hieraus hergestellter Vulkanisate gemacht.

Das Dokument DE102004013008 betrifft ein Verfahren zur Herstellung von Formmassen, die einen dispergierten Kautschuk enthalten. Der Kautschuk wird in Emulsion hergestellt und dann aus der Emulsion durch Koagulation isoliert. Der verwendete Kautschuk kann aus Butadien, Acrylnitril und einem Acrylat hergestellt werden. Nach der Polymerisation wird eine Koagulation des Latexes durchgeführt, wobei ein Agglomerationspolymerisat wie Polyvinylalcohol und ein Elektrolyt wie Magnesiumsulfat verwendet worden können.

Aufgrund des hohen Bedarfs nach Dichtmaterialien auf Basis synthetischer Kautschuke bestand die Aufgabe der vorliegenden Erfindung somit darin, Nitrilkautschuke bereitzustellen, deren Vulkanisate eine möglichst geringe Korrosivität aufweisen und sich somit für die Herstellung von Dichtungen jeder Art eignen, und ferner ein neues Verfahren zwecks zuverlässiger Herstellung solcher Nitrilkautschuke zu entwickeln, das die Koagulation von Nitrilkautschuklatices mit niedrigen Fällmittelmengen ermöglicht, so dass eine quantitative Latexfällung ohne Feinanteile gelingt (d.h. unter Erhalt eines klaren Serums). Gleichzeitiges Ziel war es, dass hierbei keine zu großen Kautschukkrümel (ohne Latex- bzw. Fällmitteleinschlüsse) entstehen und die im Produkt verbleibenden Emulgatorreste gering sind (gleichbedeutend mit einer hohen CSB-Fracht im Latexserum und im Abwasser). Zusätzlich sollten die Nitrilkautschuke neben der geringen Korrosivität auch eine gute Lagerstabilität zeigen und eine hohe Vulkanisationsgeschwindigkeit aufweisen, insbesondere niedrige Differenzen von Ausvulkanisations- und Anvulkanisationsgeschwindigkeit ($t_{90}$-$t_{10}$), und zu Vulkanisaten mit einem sehr guten Profil der mechanischen Eigenschaften führen.

Es wurde überraschenderweise gefunden, dass man Nitrilkautschuke mit einer guten Lagerstabilität, einer gleichzeitig hohen Vulkanisationsgeschwindigkeit ($t_{90}$-$t_{10}$) sowie sehr guten Vulkanisateigenschaften und einer niedrigen Metallkorrosivität erhält, wenn diese einen speziellen Chlor-Gehalt aufweisen.

**Gegenstand der vorliegenden Erfindung** ist somit ein Nitrilkautschuk, welcher Wiederholungseinheiten mindestens eines $\alpha,\beta$-ungesättigten Nitrils, mindestens eines konjugierten Diens und gegebenenfalls eines oder mehrerer weiterer copolymerisierbarer Monomere enthält und einen Chlorgehalt im Bereich von 4 bis 25 ppm, vorzugsweise 5 bis 23 ppm jeweils bezogen auf den Nitrilkautschuk aufweist.

Derartige Nitrilkautschuke sind bisher aus dem Stand der Technik nicht bekannt.

**Chlorgehalt des erfindungsgemäßen Nitrilkautschuks:**

Der **Chlorgehalt** der erfindungsgemäßen Nitrilkautschuke wird wie folgt in Anlehnung an DIN EN 14582, Verfahren A bestimmt: Die jeweilige Nitrilkautschuk-Probe wird in einem Druckgefäß nach Parr in einer Schmelze aus Natriumperoxid und Kaliumnitrat aufgeschlossen. Zu der entstehenden Schmelze wird Sulfitlösung zugegeben und mit Schwefelsäure angesäuert. In der dabei erhaltenen Lösung wird das entstandene Chlorid durch eine potentiometrische Titration mit Silbernitratlösung bestimmt und als Chlor berechnet.

**Lagerstabilität des erfindungsgemäßen Nitrilkautschuks:**

Vorteilhafterweise besitzen die erfindungsgemäßen Nitrilkautschuke eine sehr gute Lagerstabilität.

Unter Lagerstabilität eines Kautschuks versteht man eine möglichst weitgehende Konstanz des Molekulargewichts bzw. der Mooney-Viskosität über einen längeren Zeitraum und dies insbesondere auch bei höheren Temperaturen.

Man bestimmt die Lagerstabilität üblicherweise, indem man den unvulkanisierten Nitrilkautschuk über einen definierten Zeitraum bei höherer Temperatur lagert (auch als Heißluftlagerung bezeichnet) und die Differenz der Mooney-Viskositäten vor und nach dieser Lagerung bei erhöhter Temperatur bestimmt. Da die Mooney-Viskosität von Nitrilkautschuk üblicherweise bei der Heißluftlagerung zunimmt, erfolgt die Charakterisierung der Lagerstabilität durch die Differenz der Mooney-Viskosität nach Lagerung minus Mooney-Viskosität vor Lagerung.

Die Lagerstabilität LS ergibt sich somit über die folgende Formel (II)

$$LS = MV2 - MV1 \qquad (II)$$

worin

MV1den Wert für die Mooney-Viskosität eines Nitrilkautschuks und
MV2den Wert für die Mooney-Viskosität desselben Nitrilkautschuks nach einer 48 stündigen Lagerung bei 100°C darstellt.

Die Bestimmung der Werte für die Mooney-Viskosität (ML 1+4@100°C) erfolgt jeweils mittels eines Scherscheibenviskosimeters nach DIN 53523/3 bzw. ASTM D 1646 bei 100°C.

Es hat sich bewährt, die 48 stündige Lagerung des erfindungsgemäßen Nitrilkautschuks bei 100°C in einem Umlufttrockenschrank durchzuführen, wobei der Sauerstoffgehalt in diesem Umlufttrockenschrank gegenüber normaler Luft unverändert ist.

Ausreichend lagerstabil ist ein Nitrilkautschuk, wenn die Lagerstabilität LS maximal 5 Mooney-Einheiten beträgt. Bevorzugt ist LS kleiner 5 Mooney-Einheiten, besonders bevorzugt maximal 4 Mooney-Einheiten.

**Geringe Verunreinigungen im erfindungsgemäßen Nitrilkautschuk:**

Die erfindungsgemäßen Nitrilkautschuke weisen neben der exzellenten Lagerstabilität ferner nur noch wenige Verunreinigungen, insbesondere des bei der Polymerisation eingesetzten Emulgators auf, was sich in hohen CSB-Werten des Latexserums, das bei der Latexkoagulation anfällt, sowie des Waschwassers widerspiegelt.

Die im Nitrilkautschuk verbleibende Emulgatormenge wird indirekt durch Bestimmung der nach der Latexkoagulation in der wässrigen Phase enthaltenen löslichen organischen Bestandteile bestimmt. Als Maß hierfür wird der CSB (Chemischer Sauerstoffbedarf) nach DIN 38 409, Teil 41, H 41-1 und H 41-2 des Latexserums verwendet. Bei der CSB-Bestimmung werden organische Bestandteile mit stark schwefelsaurem Kaliumdichromat in Gegenwart eines Silbersulfatkatalysators quantitativ oxidiert. Anschließend wird die Menge an nicht umgesetztem Kaliumdichromat mit Eisen(II)-Ionen zurücktitriert. Der CSB-Wert wird in der DIN-Norm in der Dimension mg $_{Sauerstoff}$/ Liter Lösung bzw. in der Dimension g $_{Sauerstoff}$/ Liter Lösung angegeben. Zur besseren Vergleichbarkeit von Versuchen, bei denen Latices unterschiedlicher Feststoffkonzentration bzw. unterschiedliche Volumina von Fällmitteln eingesetzt werden, wird der CSB Wert des Serums auf die Masse des Nitrilkautschuks bezogen. In diesem Fall hat der CSB-Wert die Dimension $g_{sauertoff}$ / $kg_{NBR}$. Man erhält diesen Wert auf folgende Weise:

$$CSB_{NBR} = \frac{CSB_{Serum} \times (m_{Serum} + m_{FM})}{m_{NBR}}$$

$$CSB_{NBR} = \frac{CSB_{Serum} \times (1 - FS/100 + m_{FM})}{FS/100}$$

es bedeuten:

$CSB_{NBR}$:CSB bezogen auf 1 kg NBR [$g_{Sauerstoff}$/ $kg_{NBR}$]

$CSB_{Serum}$:CSB des Serums (experimentell bestimmt) [g $_{Sauerstoff}$ / $kg_{serum}$]

$m_{Serum}$:Masse des Serums in 1 kg Latex [kg]

$m_{FM}$:Masse des eingesetzten Fällmittels [kg/ $kg_{Latex}$]

$m_{NBR}$:Masse des Nitrilkautschuks in 1 kg Latex [kg]

FS:Feststoffgehalt des Latex [Gew. %]

Der CSB-Wert ist ein Maß für die Menge der nach der Latexkoagulation im Latexserum enthaltenen niedermolekularen Bestandteile, insbesondere der bei der Polymerisation eingesetzten Emulgatoren. Je höher bei Koagulationsversuchen, bei denen man von identischen Latices ausgeht, der CSB-Wert bezogen auf NBR ist, umso niedriger ist der Gehalt an Emulgatoren und sonstigen Verunreinigungen im Nitrilkautschuk.

**Nitrilkautschuk-Latex:**

Der dem erfindungsgemäßen Nitrilkautschuk zu Grunde liegende Nitrilkautschuk-Latex wird typischerweise durch Emulsionspolymerisation erhalten. Es handelt sich um den Latex eines Nitrilkautschuks mit Wiederholungseinheiten mindestens eines α,β-ungesättigten Nitrils, mindestens eines konjugierten Diens und gegebenenfalls eines oder mehrerer weiterer copolymerisierbarer Monomere.

Das konjugierte Dien kann von jeder Natur sein. Bevorzugt werden ($C_4$-$C_6$) konjugierte Diene eingesetzt. Besonders bevorzugt sind 1,3-Butadien, Isopren, 2,3-Dimethylbutadien, Piperylen, 1,3-Pentadien oder Mischungen daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind ($C_3$-$C_5$)-α,β-ungesättigte Nitrile wie Acrylnitril, Methacrylnitril, 1-Chloracrylnitril, Ethacrylnitril oder Mischungen davon. Besonders bevorzugt ist Acrylnitril.

Ein besonders bevorzugter Nitrilkautschuk stellt somit ein Copolymer aus Acrylnitril und 1,3-Butadien dar.

Neben dem konjugierten Dien und dem α,β-ungesättigten Nitril können noch ein oder mehrere weitere dem Fachmann bekannte, copolymerisierbare Monomere eingesetzt werden, z.B. α,β-ungesättigte Mono- oder Dicarbonsäuren, deren Ester oder Amide.

Als α,β-ungesättigte Mono- oder Dicarbonsäuren können beispielsweise Fumarsäure, Maleinsäure, Acrylsäure, Methacrylsäure, Crotonsäure und Itakonsäure verwendet werden. Bevorzugt sind dabei Maleinsäure, Acrylsäure, Methacrylsäure und Itakonsäure. Solche Nitrilkautschuke werden üblicherweise auch als carboxylierte Nitrilkautschuke, oder abgekürzt auch als "XNBR" abgekürzt.

Als Ester der α,β-ungesättigten Carbonsäuren werden beispielsweise Alkylester, Alkoxyalkylester, Hydroxyalkylester oder Mischungen daraus eingesetzt.

Besonders bevorzugte Alkylester der α,β-ungesättigten Carbonsäuren sind Methyl(Meth)acrylat, Ethyl(meth)acrylat, Propyl(meth)acrylat, n-Butyl(Meth)acrylat, t-Butyl(Meth)acrylat, Hexyl(meth)acrylat, 2-Ethlyhexyl(meth)acrylat, Octyl(meth)acrylat und Lauryl(meth)acrylat. Insbesondere wird n-Butylacrylat eingesetzt.

Besonders bevorzugte Alkoxyalkylester der α,β-ungesättigten Carbonsäuren sind Methoxyethyl(meth)acrylat, Ethoxyethyl(meth)acrylat und Methoxyethyl(meth)acrylat. Insbesondere wird Methoxyethylacrylat eingesetzt.

Besonders bevorzugte Hydroxyalkylester der α,β-ungesättigten Carbonsäuren sind Hydroxyethyl(meth)acrylat, Hydroxypropyl-(meth)acrylat und Hydroxy(butyl(meth)acrylat.

Als Ester der α,β-ungesättigten Carbonsäuren werden ferner beispielsweise Polyethylenglykol(meth)acrylat, Polypropylenglykol(meth)acrylat, Glycidyl(meth)acrylat, Epoxy(meth)acrylat und Urethan(meth)acrylat eingesetzt.

Weitere mögliche Monomere sind Vinylaromaten wie Styrol, a-Methylstyrol und Vinylpyridin.

Die Anteile an konjugiertem Dien und α,β-ungesättigtem Nitril in den erfindungsgemäßen Nitrilkautschuken können in weiten Bereichen variieren. Der Anteil des oder der Summe der konjugierten Diene liegt üblicherweise im Bereich von 20 bis 95 Gew.%, bevorzugt im Bereich von 40 bis 90 Gew.%, besonders bevorzugt im Bereich von 60 bis 85 Gew. %, bezogen auf das Gesamtpolymer. Der Anteil des oder der Summe der α,β-ungesättigten Nitrile liegt üblicherweise bei 5 bis 80 Gew.%, bevorzugt bei 10 bis 60 Gew.%, besonders bevorzugt bei 15 bis 40 Gew.%, bezogen auf das Gesamtpolymer. Die Anteile der Monomere summieren sich jeweils zu 100 Gew.% auf.

Die zusätzlichen Monomere können in Mengen von 0 bis 40 Gew.%, bevorzugt 0,1 bis 40 Gew.%, besonders bevorzugt 1 bis 30 Gew.%, bezogen auf das Gesamtpolymer, vorliegen. In diesem Fall werden entsprechende Anteile des oder der konjugierten Diene und/oder des oder der α,β-ungesättigten Nitrile durch die Anteile dieser zusätzlichen Monomere ersetzt, wobei sich die Anteile aller Monomere weiterhin jeweils zu 100 Gew.% aufsummieren.

Werden als zusätzliche Monomere Ester der (Meth)acrylsäure eingesetzt, so erfolgt dies üblicherweise in Mengen von 1 bis 25 Gew. %.

Werden als zusätzliche Monomere α,β-ungesättigte Mono- oder Dicarbonsäuren eingesetzt, so erfolgt dies üblicherweise in Mengen von weniger als 10 Gew. %.

Der Stickstoffgehalt wird in den erfindungsgemäßen Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C > 85 Gew. % löslich.

Die Nitrilkautschuke weisen Mooney-Viskositäten (ML (1+4 @100°C)) von 10 bis 150, vorzugsweise von 20 bis 100 Mooneyeinheiten auf. Die Mooney-Viskosität (ML (1+4@100°C)) wird mittels eines Scherscheibenviskosimeters nach DIN 53523/3 bzw. ASTMD 1646 bei 100°C bestimmt.

Die Glastemperaturen der Nitrilkautschuke liegen im Bereich -70°C bis +10°C, vorzugsweise im Bereich -60°C bis 0°C.

Bevorzugt sind erfindungsgemäße Nitrilkautschuke, die Wiederholungseinheiten von Acrylnitril, 1,3-Butadien und gegebenenfalls von einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren $\alpha$,$\beta$-ungesättigten Mono- oder Dicarbonsäure, deren Estern oder Amiden aufweisen, und insbesondere Wiederholungseinheiten eines Alkylesters einer $\alpha$,$\beta$-ungesättigten Carbonsäuren, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat oder Lauryl(meth)acrylat.

**Gegenstand der vorliegenden Erfindung** ist ferner ein Verfahren zur Herstellung von Nitrilkautschuken durch Emulsionspolymerisation mindestens eines $\alpha$,$\beta$-ungesättigten Nitrils, mindestens eines konjugierten Diens und gegebenenfalls eines oder mehrerer weiterer copolymerisierbarer Monomere in Gegenwart eines Molekulargewichtsreglers, wobei der bei der Polymerisation anfallende, den Nitrilkautschuk enthaltende Latex einer Koagulation unterworfen und der koagulierte Nitrilkautschuk anschließend gewaschen wird, dadurch gekennzeichnet, dass

(i) der bei der Emulsionspolymerisation erhaltene Latex vor der Koagulation einen pH-Wert von mindestens 6 aufweist,
(ii) die Latexkoagulation unter Verwendung mindestens eines Salzes eines ein-, zwei- oder dreiwertigen Metalls, bei dem es sich optional um ein Chlorid handelt, als Fällmittel durchgeführt wird,
(iii) die Latexkoagulation in Gegenwart von Polyvinylacetat, welches gegebenenfalls teilweise oder ganz verseift ist, als Co-Fällmittel erfolgt und
(iv) die Latexkoagulation und/oder die Aufarbeitung des koagulierten Latex unter Einsatz von Chlorid-Ionen haltigem Wasser durchgeführt wird, sofern es sich bei dem Salz des ein-, zwei- oder dreiwertigen Metalls (ii) nicht um ein Chlorid handelt.

Dieses Verfahren liefert zuverlässig die erfindungsgemäßen Nitrilkautschuke mit dem geforderten speziellen Chlor-Gehalt. Es besitzt ferner den Vorteil, dass es eine substanzielle Reduktion der für die Koagulation von Nitrilkautschuk-Latices notwendigen Salzmengen ermöglicht.

Die Herstellung der Nitrilkautschuke erfolgt im erfindungsgemäßen Verfahren durch Emulsionspolymerisation.

Emulsionspolymerisationen werden unter Einsatz von Emulgatoren durchgeführt. Hierfür sind dem Fachmann eine große Bandbreite von Emulgatoren bekannt und zugänglich. Als Emulgatoren können beispielsweise anionische Emulgatoren oder auch neutrale Emulgatoren eingesetzt werden. Bevorzugt werden anionische Emulgatoren eingesetzt, besonders bevorzugt in Form wasserlöslicher Salze.

Als **anionische Emulgatoren** können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 6. Auflage, Band 31, S. 345-355).

Als **anionische Emulgatoren** können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erdnussöl, Leinsamenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium-Natrium, Kalium und Ammoniumsalze verwendet. Die Natrium- und Kaliumsalze sind bevorzugt.

**Anionische Emulgatoren** sind ferner Sulfonate, Sulfate und Phosphate, die an einen organischen Rest gebunden sind. Als organischer Rest kommen aliphatische, aromatische, alkylierte Aromaten, kondensierte Aromaten, sowie methlyenverbrückte Aromaten infrage, wobei die methlyenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methlyenverbrückter Napthalinsulfonate, die auch oligomerisiert sein können, wobei der Oligimerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis

3 Sulfonsäuregruppen) im Molekül enthalten können. Besonders bevorzugt sind Na-Laursylsulfat, Na-Alkylsulfonatgemische mit 12 bis 18 C-Atomen, Na-Alkylarylsulfonate, Na-DÜsobutylennaphthalinsulfonat, methlyenverbückte Polynaphthalinsulfonatgemische sowie methylenverbrückte Arylsulfonatgemische.

**Neutrale Emulgatoren** leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierter Talgfettsäure, sowie Mischungen derselben, Natriumlaurylsulfat, Na-Alkylsulfonate, Natrium-Alkylbenzolsufonat sowie alkylierte und methylenverbrückte Naphthalinsulfonsäuren.

Die Emulgatoren werden in einer Menge von 0,2 bis 15 Gew.-Teile, bevorzugt 0,5 bis 12,5 Gew.-Teile, besonders bevorzugt 1,0 bis 10 Gew.-Teile bezogen auf 100 Gew.-Teile der Monomermischung eingesetzt.

Die Emulsionspolymerisation wird unter Verwendung der genannten Emulgatoren durchgeführt. Falls nach Abschluss der Polymerisation Latices erhalten werden, die aufgrund einer gewissen Instabilität zur vorzeitigen Selbstkoagulation neigen, können die genannten Emulgatoren auch noch zur Nachstabilisierung der Latices zugesetzt werden. Dies kann insbesondere vor der Entfernung nicht umgesetzter Monomerer durch Behandlung mit Wasserdampf sowie vor einer Latexlagerung notwendig werden.

Zur **Molekuiargemtchtsregelnng** des entstehenden Nitrilkautschuks wird mindestens ein Molekulargewichtsregler eingesetzt.

Der Regler wird üblicherweise in einer Menge von 0,01 bis 3,5 Gew.-Teilen, bevorzugt von 0,05 bis 2,5 Gew.-Teilen auf 100 Gew.-Teile der Monomermischung eingesetzt.

Zur Einstellung des Molekulargewichts können mercaptanhaltige Carbonsäuren, mercaptanhaltige Alkohole, Xanthogendisulfide, Thiuramdisulfide, halogenierte Kohlenwasser-stoffe, verzweigte aromatische oder aliphatische Kohlenwasserstoffe sowie auch lineare oder verzweigte Mercaptane eingesetzt werden. Diese Verbindungen weisen üblicherweise 1 bis 20 Kohlenstoffatome auf (siehe Rubber Chemistry and Technology (1976), 49(3), 610-49 (Uraneck, C. A.): "Molecular weight control of elastomers prepared by emulsion polymerization" und D. C. Elackiey, Emulsion Polymerization, Theory and Practice, Applied Science Publishers Ltd London, 1975, S. 329-381).

Beispiele für mercaptanhaltige Alkohole und mercaptanhaltige Carbonsäuren sind Monothioethylenglycol und Mercaptopropionsäure.

Beispiele für Xanthogendisulfide sind Dimethylxanthogendisulfid, Diethylxanthogendisulfid, und Diisopropylxanthogendisulfid.

Beispiele für Thiuramdisulfide sind Tetramethylthiuramdisulfid, Tetraethylthiuramdisulfid und Tetrabutylthiuramdisulfid.

Beispiele für halogenierte Kohlenwasserstoffe sind Tetrachlorkohlenstoff, Chloroform, Methyljodid, Dijodmethan, Difluorodijodomethan, 1,4-Dijodobutan, 1,6-Dijodohexan, Ethylbromid, Ethyljodid, 1,2-Dibromotetrafluorethan, Bromtrifluorethen, Bromdifluorethen.

Beispiele für verzweigte Kohlenwasserstoffe sind diejenigen, von denen leicht ein H-Radikal abgespaltet werden kann. Beispiele hierfür sind Toluol, Ethylbenzol, Cumol, Pentaphenylethan, Triphenylmethan, 2,4-Diphenyl,4-Methyl-1-Penten, Dipenten sowie Terpene wie z.B. Limonen, $\alpha$-Pinen, $\beta$-Pinen, $\alpha$-Carotin und $\beta$-Carotin.

Beispiele für lineare oder verzweigte Mercaptane sind n-Hexylmercaptan oder auch Mercaptane, die 12-16 Kohlenstoffatome und mindestens drei tertiäre Kohlenstoffatomen enthalten, wobei der Schwefel an eines dieser tertiären Kohlenstoffatome gebunden ist. Diese Mercaptane sind bevorzugt und können entweder einzeln oder in Gemischen verwendet werden. Geeignet sind beispielsweise die Additionsverbindungen von Schwefelwasserstoff an oligomerisiertes Propen, insbesondere tetrameres Propen, oder an oligomerisiertes Isobuten, insbesondere trimere Isobuten, die in der Literatur häufig als tertiäres Dodecylmercaptan ("t-DDM") bezeichnet werden.

Solche Alkylthiole bzw. (Isomeren)-Mischungen von Alkylthiolen sind entweder käuflich erhältlich oder aber nach Verfahren, die in der Literatur hinlänglich beschrieben sind, für den Fachmann herstellbar (siehe z.B. z.B. JP 07-316126**,** JP 07-316127 und JP 07-316128 sowie GB 823,823 **und** GB 823,824.)

Ein Beispiel für ein Alkylthiol, das die oben vorgegebene Definition erfüllt, ist 2,2,4,6,6,8,8-Pentamethylheptan-4-thiol.

Einsetzbar ist ferner ein Gemisch von $C_{12}$-Mercaptanen enthaltend

- 2,2,4,6,6-Pentamethylheptanthiol-4,
- 2,4,4,6,6-Pentamethylheptanthiol-2,
- 2,3,4,6,6-Pentamethylheptanthiol-2 und
- 2,3,4,6,6-Pentamethylheptanthiol-3,

welches zusammen mit einem Verfahren zu seiner Herstellung in der deutschen Patentanmeldung DE 102007024009 beschrieben wird. Dieses spezielle Gemisch kann durch Umsetzung von Schwefelwasserstoff mit Triisobuten in einem kontinuierlichen Verfahren bei Temperaturen im Bereich von 0°C bis -60°C erhalten werden, wobei

(a) der Schwefelwasserstoff vor der Umsetzung einer Trocknung unterzogen wird,
(b) das eingesetzte Triisobuten einen Wassergehalt von maximal 70 ppm besitzt,
(c) als Katalysator Bortrifluorid in Mengen von maximal 1,5 Gew.%, bezogen auf das eingesetzte Triisobuten verwendet wird,
(d) die Umsetzung in Abwesenheit von mit Bortrifluorid komplexbildenden Verbindungen erfolgt und
(e) das Reaktionsgemisch im Anschluss an die Umsetzung mit einer wässrigen alkalischen Lösung in Kontakt gebracht und der Katalysator entfernt wird.

Die einzelnen Alkylthiole bzw. deren Gemische werden üblicherweise in einer Menge von 0,05 bis 3 Gew.-Teilen, vorzugsweise von 0,1 bis 1,5 Gew.-Teilen bezogen auf 100 Gew.-Teile der Monomermischung eingesetzt.

Die Dosierung des Molekulargewichtsreglers bzw. der Molekulargewichtsreglermischung erfolgt entweder zu Beginn der Polymerisation oder aber portionsweise im Verlauf der Polymerisation, wobei die portionsweise Zugabe sämtlicher oder einzelner Komponenten der Reglermischung während der Polymerisation bevorzugt ist.

Der Molekulargewichtsregler findet sich aufgrund seiner Funktion in einem gewissen Maß in Form von Endgruppen im Nitrilkautschuk wieder. Wird somit beispielsweise ein Alkylthiol oder ein Gemisch von Alkylthiolen eingesetzt, weist der Nitrilkautschuk in einem gewissen Maß Alkylthio-Endgruppen auf. In dem Fall, dass das oben beschriebene spezielle Gemisch von $C_{12}$-Mercaptanen eingesetzt wird, handelt es sich somit um die entsprechenden Thio-Endgruppen der im Reglergemisch enthaltenen Thiole, d.h. 2,2,4,6,6-Pentamethylheptan-4-thio- und/oder 2,4,4,6,6-Pentamethylheptan-2-thio- und/oder 2,3,4,6,6-Pentamethylheptan-2-thio und/oder 2,3,4,6,6-Pentamethylheptan-3-thio-Endgruppen. Bevorzugt enthält ein solcher Nitrilkautschuk 2,2,4,6,6-Pentamethylheptan-4-thio-, 2,4,4,6,6-Pentamethylheptan-2-thio-, 2,3,4,6,6-Pentamethylheptan-2-thio und 2,3,4,6,6-Pentamethylheptan-3-thio-Endgruppen.

Zur Initiierung der Emulsionspolymerisation werden typischerweise **Polymerisationsinitiatoren** eingesetzt, die in Radikale zerfallen (radikalische Polymerisationsinitiatoren). Hierzu gehören Verbindungen, die eine -O-O- Einheit (Peroxo-Verbindungen) oder eine -N=N- Einheit (Azoverbindung) enthalten.

Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Geeignete Salze der Peroxodischwefelsäure und der Peroxodiphosphorsäure sind die Natrium-, Kalium- und Ammoniumsalze. Geeignete Hydroperoxide sind z.B. t-Butylhydroperoxid, Cumolhydroperoxid und p-Menthanhydroperoxid. Geeignete Peroxide mit zwei organischen Resten sind Dibenzoylperoxid, 2,4,-Dichlorbenzoylperoxid, Di-t-Butylperoxid, Dicumylperoxid, t-Butylperbenzoat, t-Butylperacetat etc. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt. Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Initiatorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamtetraacetat, Natrium-Nitrilotriacetat sowie Trinatriumphosphat oder Tetrakaliumdiphsophat.

Bevorzugte Redoxsysteme sind beispielsweise: 1) Kaliumperoxodisulfat in Kombination mit Triethanolamin, 2) Ammoniumperoxodiphosphat in Kombination mit Natrimmetabisulfit ($Na_2S_2O_5$), 3) p-Menthanhydroperoxid / Natriumformaldehydsulfoxylat in Kombination mit Fe-II-Sulfat ($FeSO_4$ x 7 $H_2O$), Natrium-Ethylendiaminoacetat und Trinatriumphosphat; 4) Cumolhydroperoxid / Natriumformaldehydsulfoxylat in Kombination mit Fe-II-Sulfat ($FeSO_4$ x 7 $H_2O$), Natrium-Ethylendiaminoacetat und Tetrakaliumdiphosphat.

Die Menge an Oxidationsmittel beträgt 0,001 bis 1 Gew.-Teile bezogen auf 100 Gew.-Teile Monomer. Die molare Menge an Reduktionsmittel liegt zwischen 50% bis 500% bezogen auf die molare Menge des eingesetzten Oxidationsmittels.

Die molare Menge an Komplexbildner bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu Beginn der Polymerisation der Polymerisation oder während der Polymerisation zudosiert.

Die portionsweise Zugabe sämtlicher sowie einzelner Komponenten des Aktivatorsystems während der Polymerisation ist bevorzugt. Durch die sequentielle Zugabe lässt sich die Reaktionsgeschwindigkeit steuern.

Die **Polymerisationszeit** liegt im Bereich von 5 h bis 15 h und hängt im Wesentlichen vom Acrylnitrilgehalt

der Monomermischung und von der Polymerisationstemperatur ab.

Die **Polymerisationstemperatur** liegt im Bereich von 0 bis 30°C, bevorzugt im Bereich von 5 bis 25°C.

Bei Erreichung von **Umsätzen** im Bereich von 50 bis 90%, vorzugsweise im Bereich von 65 bis 85% wird die Polymerisation abgestoppt.

Hierfür wird dem Reaktionsgemisch ein **Stopper** zugesetzt. Hierfür geeignet sind beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-$\alpha$-Naphthylamin und aromatische Phenole wie tert-Butylbrenzkatechol, oder Phenothiazin.

Die bei der Emulsionspolymerisation verwendete **Wassermenge** liegt im Bereich von 100 bis 900 Gew.-Teilen, bevorzugt im Bereich von 120 bis 500 Gew.-Teilen, besonders bevorzugt im Bereich von 150 bis 400 Gew.-Teilen Wasser bezogen auf 100 Gew.-Teile der Monomermischung.

Zur Reduktion der Viskosität während der Polymerisation, zur pH-Einstellung sowie als pH-Puffer können der wässrigen Phase bei der Emulsionspolymerisation Salze zugesetzt werden. Typische Salze sind Salze einwertiger Metalle in Form von Kalium- und Natriumhydroxid, Natriumsulfat, Natriumcarbonat, Natriumhydrogencarbonat, Natriumchlorid und Kaliumchlorid. Bevorzugt sind Natrium- und Kaliumhydroxid, Natriumhydrogencarbonat und Kaliumchlorid. Die Mengen dieser Elektrolyte liegen im Bereich 0 bis 1 Gew.-Teile, vorzugsweise 0 bis 0,5 Gew.-Teile bezogen auf 100 Gew.-Teile der Monomermischung.

Die Polymerisation kann entweder diskontinuierlich oder auch kontinuierlich in einer Rührkesselkaskade durchgeführt werden.

Zur Erzielung eines gleichmäßigen Polymerisationsverlaufs wird für den Start der Polymerisation nur ein Teil des Initiatorsystems verwendet und der Rest während der Polymerisation nachdosiert. Üblicherweise startet man die Polymerisation mit 10 bis 80 Gew. %, vorzugsweise 30-50 Gew. % der Gesamtmenge an Initiator. Auch die Nachdosierung einzelner Bestandteile des Initiatorsystems ist möglich.

Will man chemisch einheitliche Produkte herstellen, werden Acrylnitril bzw. Butadien nachdosiert, wenn die Zusammensetzung außerhalb des azeotropen Butadien/Acrylnitril-Verhältnisses liegt. Vorzugsweise ist eine Nachdosierung bei NBR-Typen mit Acrylnitrilgehalten von 10 bis 34 sowie bei den Typen mit 40 bis 50 Gew.% Acrylnitril (W. Hofmann; Rubber Chem. Technol. 36 (1963) 1) der Fall. Die Nachdosierung erfolgt - wie z.B. in der DD 154 702 angegeben - vorzugsweise computergesteuert auf der Basis eines Rechnerprogramms.

Zur Entfernung nicht umgesetzter Monomere sowie flüchtiger Bestandteile wird der abgestoppte Latex einer Wasserdampfdestillation unterzogen. Hierbei werden Temperaturen im Bereich von 70°C bis 150°C angewandt, wobei bei Temperaturen <100°C der Druck reduziert wird.

Vor der Entfernung der flüchtigen Bestandteile kann eine Nachstabilisierung des Latex mit Emulgator erfolgen. Hierfür verwendet man zweckmäßigerweise die zuvor genannten Emulgatoren in Mengen von 0,1 bis 2,5 Gew. %, vorzugsweise 0,5 bis 2,0 ,Gew. % bezogen auf 100 Gew.-Teile Nitrilkautschuk.

Vor oder bei der Latexkoagulation können dem Latex ein oder mehrere Alterungsschutzmittel zugesetzt werden. Hiefür eigenen sich phenolische, aminische und auch sonstige Alterungsschutzmittel.

Geeignete phenolische Alterungsschutzmittel sind alkylierte Phenole, styrolisiertes Phenol, sterisch gehinderte Phenole wie 2,6-Di-tert.-Butylphenol, 2,6-Di-*tert*-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen bis-(4-Methyl-6-*tert*-Butylphenol) (BPH) sowie sterisch gehinderte Thiobisphenole.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-$\alpha$-Naphthylamin (PAN), Phenyl-$\beta$-Naphthylamin (PBN), vorzugsweise solche auf Phenylendiaminbasis eingesetzt. Beispiele für Phenylendiamine sind *N*-Isopropyl-*N*'-phenyl-p-Phenylendiamin, *N*-1,3-Dimethylbutyl-*N*'-Phenyl-p-Phenylendiamin (6PPD), *N*-1,4-Dimethylpentyl-*N*'-phenyl-p-Phenylendiamin (7PPD), *N,N*'-bis-1,4-(1,4-Dimethylpentyl)-*p*-Phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Altrungsschutzmitteln eingesetzt. TMQ, MBI und MMBI werden vor allem für NBR-Typen verwendet, die peroxidisch vulkanisiert werden.

**Latex-Koagulation:**

Für die Koagulation wird der Latex mit einem pH-Wert von mindestens 6, bevorzugt von > 6 eingesetzt. Gegebenenfalls wird dieser pH-Wert durch Zusatz einer Base, bevorzugt von Ammoniak bzw. Natrium- oder Kaliumhydroxid eingestellt. Säuren werden bei der Latex-Koagulation nach dem erfindungsgemäßen Verfahren nicht eingesetzt.

### 1. Fällmittel: Salz eines ein-, zwei- oder dreiwertigen Metalls

Als Fällmittel für die Latexkoagulation wird mindestens ein Salz eines ein-, zwei- oder dreiwertigen Metalls eingesetzt.

Als Anionen dieser Salze werden üblicherweise ein- oder zweiwertige Anionen eingesetzt. Bevorzugt sind Halogenide, besonders bevorzugt Chlorid. Eingesetzt werden können auch Nitrate, Sulfate, Hydrogencarbonate, Carbonate, formiate und Acetate.

Bevorzugt wird die Koagulation unter Einsatz mindestens eines Salzes ausgewählt aus der Gruppe bestehend aus Aluminium-, Calcium-, Magnesium-, Natrium-, Kalium- und Lithium-Salzen durchgeführt.

Geeignet sind beispielsweise Natriumchlorid, Kaliumchlorid, Calciumchlorid, Magnesiumchlorid, Magnesiumsulfat, Natriumnitrat, Kaliumnitrat, Natriumsulfat, Kaliumsulfat, Natriumhydrogencarbonat, Kaliumhydrogencarbonat, Natriumcarbonat, Kaliumcarbonat, Aluminiumsulfat, Kaliumaluminiumsulfat (Kaliumalaun), Natriumaluminiumsulfat (Natriumalaun), Natriumacetat, Calciumacetat und Calciumformiat.

Dieses Salz wird üblicherweise in Form einer Lösung eingesetzt, deren Konzentration 0,33 bis 30 Gew. % beträgt.

Werden mehrere verschiedene Salze als Fällmittel eingesetzt, so können diese als gemeinsame wässrige Lösung oder aber auch in Form getrennter wässriger Lösungen eingesetzt werden.

Für die Herstellung der Salzlösung(en) kann entweder entionisiertes Wasser (abgekürzt auch als "DW") oder auch nicht entionisiertes Wasser (abgekürzt auch als "BW") verwendet werden. Nicht entionisiertes Wasser enthält Chlorid-Ionen.

Die für die Latexkoagulation notwendige Gesamtmenge an Salzen beträgt 0,1 - 20 Gew. %, vorzugsweise 0,2 - 15 Gew. %, besonders bevorzugt 0,5 - 10 Gew. % Salz, bezogen auf 100 Gew.% Nitrilkautschuk.

### Co-Fällmittel: Gegebenenfalls teil- oder ganz verseiftes Polyvinylacetat

Wichtig für das **erfindungsgemäße** Verfahren ist es, dass neben dem Salz eines ein-, zwei- oder dreiwertigen Metalls Polyvinylacetat, welches gegebenenfalls teilweise oder ganz verseift ist, als Co-Fällmittel eingesetzt wird.

Das erfindungsgemäß einzusetzende, gegebenenfalls teil- oder ganz verseifte Polyvinylacetat kann Typen unterschiedlichen Molekulargewichts (bzw. Viskosität in wässrigen Lösungen) und unterschiedlicher Veresterungsgrade enthalten (siehe Ullmann's Encyclopädie der Technischen Chemie, 4. Auflage, Band 19, Verlag Chemie, Weinheim-Deefield Beach Florida-Basel (1980), S. 374-378**).**

Die Viskosität des einzusetzenden, gegebenenfalls teil- oder ganz verseiften Polyvinylacetats wird nach DIN 53015 an 4%igen Lösungen in destilliertem Wasser bei 20°C bestimmt und liegt im Bereich von 0,5 bis 200 cP, vorzugsweise im Bereich von 1 bis 100 cP, besonders bevorzugt im Bereich von 3 bis 70 cP.

Die Esterzahl des einzusetzenden, gegebenenfalls teil- oder ganz verseiften Polyvinylacetats wird nach Houben-Weyl, Methoden der organischen Chemie 4. Auflage" Band 2, Analytische Methoden, Georg-Thieme-Verlag (1953) S. 514-115 bestimmt und liegt im Bereich von 0 bis 240, d. h. es kann sich sowohl um unverseifte als auch um teilverseifte oder um vollverseifte Typen handeln.

Das gegebenenfalls teil- oder ganz verseifte Polyvinylacetat wird üblicherweise in Form einer wässrigen Lösung eingesetzt, die eine Konzentration im Bereich von 0,1 bis 10 Gew.%, bevorzugt im Bereich von 0,5 bis 5 Gew. % bezogen auf den Nitrilkautschuk besitzt.

Es ist anzumerken, dass es ohne Probleme möglich ist, das erfindungsgemäße Verfahren mit dem gewünschten Erfolg in Abwesenheit weiterer Fällhilfsmitteln und dabei insbesondere in Abwesenheit von $C_1$-$C_4$-Alkylcellulosen, Hydroxyalkylcellulosen, auf Pflanzen zurückgehenden proteinartigen Materialien oder Polysacchariden, wie z.B. Stärke, oder wasserlöslichen Polyaminverbindungen sowie Gelatine durchzuführen. Wichtig ist der Einsatz von Polyvinylacetat.

Der zur Koagulation eingesetzte Latex besitzt zweckmäßigerweise eine **Feststoffkonzentration** im Bereich von 1 bis 40 Gew. %, vorzugsweise im Bereich von 5 bis 35 Gew. %, besonders bevorzugt im Bereich von 10 bis 30 Gew.% und ganz besonders bevorzugt im Bereich von 10 bis 20 Gew. %.

Die Latexkoagulation kann kontinuierlich oder diskontinuierlich erfolgen. Bevorzugt ist eine kontinuierliche Koagulation, die mit Hilfe von Düsen durchgeführt wird.

Die Latexkoagulation wird im Temperaturbereich von 10 bis 100°C durchgeführt. Vorzugsweise erfolgt die Latexkoagulation bei einer Temperatur im Bereich von 20 bis 90°C.

Bei allen nachfolgend dargestellten Varianten ist es hilfreich, wenn nach erfolgter Zusammenführung aller zur Koagulation benötigten Lösungen und Substanzen das Reaktionsgemisch eine erhöhte Temperatur aufweist.

Die Reihenfolge der Zugabe des Fällmittels und des Polyvinylacetats als Co-Fällmittel zum NBR-Latex ist unkritisch. Möglich sind die folgenden Vorgehensweisen:

1) Zugabe der wässrigen Salzlösung(en) zu dem Nitrilkautschuk-Latex in einer Menge, die für eine quantitative

Latexkoagulation nicht ausreichend ist, und anschließende Zugabe der wässrigen Lösung des ggf. teil- oder ganz verseiften Polyvinylacetats. Die Polyvinylacetatlösung kann sowohl bei Raumtemperatur oder auch nach der Erwärmung des Latex/Salzgemisches zugegeben wird. Bevorzugt ist es, die Zugabe der Polyvinylacetatlösung nach einer Erwärmung des Latex/Salzgemischs auf Temperaturen > 50°C, vorzugsweise >60°C, besonders bevorzugt > 80°C durchzuführen.

2) Zusatz einer wässrigen Lösung des gegebenenfalls teil- oder ganz verseiften Polyvinylacetats zu dem Nitrilkautschuk-Latex und anschließende Zugabe der wässrigen Salzlösung(en). Die Zugabe der Polyvinylacetatlösung zum Latex vor der Elektrolytlösung erfolgt vorzugsweise bei Temperaturen < 40°C.

3) Gleichzeitige Zugabe der wässrigen Lösungen des gegebenenfalls voll- oder teilverseiftem Polyvinylacetats und des Salzes/der Salze zu dem Nitrilkautschuk-Latex. Die gleichzeitige Zugabe von Salz und Polyvinylacetat erfolgt bevorzugt bei Temperaturen < 40°C, wobei das Reaktionsgemisch nach der Zugabe des Fällmittelgemischs auf Temperaturen >50, bevorzugt > 60°C erwärmt wird.

Wird als Fällmittel das Salz eines zweiwertigen Metalls, insbesondere Magnesiumchlorid, verwendet, so ist die oben dargestellte Variante 1 bevorzugt. Dem NBR-Latex wird im ersten Schritt eine wässrige $MgCl_2$-Lösung zugesetzt, wobei die $MgCl_2$-Menge ca. 1/10 bis 9/10, vorzugsweise ¼ bis 1/5 der für eine quantitative Latexkoagulation notwendigen Salzmenge entspricht und im zweiten Schritt wird das gegebenenfalls teil- oder ganz verseifte Polyvinylacetat erst bei höheren Temperaturen bevorzugt > 60°C, besonders bevorzugt > 90°C zugegeben.

**Wäsche des koagulierten Nürilkautschuks**

Nach der Koagulation liegt der Nitrilkautschuk üblicherweise in Form sogenannter Krümel vor. Die Wäsche des koagulierten NBR wird daher auch als Krümelwäsche bezeichnet. Für die Wäsche dieser koagulierten Krümel kann entweder entionisiertes Wasser (auch als "DW" bezeichnet) oder nicht entionisiertes Wasser (auch als "BW" bezeichnet) eingesetzt werden.

Die Wäsche wird bei einer Temperatur im Bereich von 15 bis 90°C durchgeführt, bevorzugt bei einer Temperatur im Bereich von 20 bis 80°C.

Die Menge des Waschwassers beträgt 0,5 bis 20 Gew.-Teile, bevorzugt 1 bis 10 Gew.-Teile und besonders bevorzugt 1 bis 5 Gew.-Teile bezogen auf 100 Gew.-Teile Nitrilkautschuk.

Bevorzugterweise werden die Kautschukkrümel einer mehrstufigen Wäsche unterworfen, wobei die Kautschukkrümel zwischen den einzelnen Waschstufen teilweise entwässert werden. Die Restfeuchten der Krümel zwischen den einzelnen Waschstufen liegen im Bereich von 5 bis 50 Gew.%, vorzugsweise im Bereich von 7 bis 25 Gew. %. Die Zahl der Waschstufen liegt üblicherweise bei 1 bis 7, vorzugsweise bei 1 bis 3. Die Wäsche wird diskontinuierlich oder kontinuierlich durchgeführt. Vorzugsweise verwendet man ein mehrstufiges, kontinuierliches Verfahren, wobei für den schonenden Umgang mit Wasser eine Gegenstromwäsche bevorzugt ist.

**Wasserentfernung und Trocknung**

Nach Abschluss der Wäsche hat es sich bewährt, die Nitrilkautschuk-Krümel zu entwässern. Dies geschieht üblicherweise zweistufig. In der 1. Stufe werden die Kautschukkrümel mechanisch vorentwässert. In der 2. Stufe wird das restliche Wasser verdampft. Sowohl die Vorentwässerung als auch die Trocknung erfolgen bevorzugt kontinuierlich. Für die mechanische Vorentwässerung eignen sich Seiherschnecken, bei denen das Wasser seitlich über Seiherspalte abgequetscht wird oder Schnecken, bei denen die mechanische Entwässerung gegen den Produktstrom (Weldingprinzip) erfolgt.

Die Trocknung des vorentwässerten Nitrilkautschuks erfolgt in einem Fließbettrockner oder in einem Plattentrockner. Die Temperaturen bei der Trocknung liegen bei 80 bis 150°C. Bevorzugt ist eine Trocknung mit Temperaturprogramm, wobei gegen Ende des Trockenprozesses die Temperatur abgesenkt wird.

Überraschenderweise führen die erfindungsgemäßen Nitrilkautschuke, die den aufgeführten speziellen Chlor-Gehalt besitzen, zu Vulkanisaten, die eine sehr geringe Metallkorrosivität aufweisen und dies obwohl der Chlor-Gehalt im Nitrilkautschuk höher ist als bei in den Halogen-freien Nitrilkautschuken aus EP-A- 0 779 300 und EP-A-0 779 301. Sie besitzen ferner die gewünschte hohe Lagerstabilität LS von maximal 5 Mooney-Einheiten. Die hohe Lagerstabilität hat bereits während der Trocknung des Nitrilkautschuks positive Auswirkungen, da ansonsten bei dieser Trocknung schon ungewollt eine gewisse Alterung des Kautschuks stattfindet. Durch die hohe Lagerstabilität wird die Einstellung einer vorgegebenen Ziel-Mooney-Viskosität erleichtert. Hierdurch wird die Menge an nicht spezifikationsgerechtem Nitrilkautschuk reduziert. Des Weiteren resultiert aus der hohen Lagerstabilität eine Reduktion der Reklamationen, die sich durch Änderung der Mooney-Viskosität bei langen Lager- bzw. Transportzeiten ergeben. Die erfindungsgemäßen Kautschuke eignen sich für die reproduzierbare Herstellung von vulkanisierbaren Mischungen. Die hieraus durch Vulkanisation erhältlichen Formteile zeichnen sich somit auch durch ein reproduzierbares mechanisches und physikalisches

Eigenschaftsprofil aus. Zusätzlich zu der guten Lagerstabilität besitzen die erfindungsgemäßen Nitrilkautschuke auch die gewünschte hohe Vulkanisationsgeschwindigkeit (Differenz von Ausvulkanisations- minus Anvulkanisationszeit), und die erhaltenen Vulkanisate verfügen über ein sehr gutes Modulniveau.

**Gegenstand der Erfindung** ist daher auch die Verwendung der erfindungsgemäßen Nitrilkautschuke zur Herstellung von vulkanisierbaren Mischungen enthaltend mindestens einen erfindungsgemäßen Nitrilkautschuk, mindestens einen Vernetzer und gegebenenfalls weitere Additive.

Die Herstellung dieser vulkanisierbaren Mischungen erfolgt durch Mischen mindestens eines erfindungsgemäßen Nitrilkautschuks, mindestens eines Vernetzers und gegebenenfalls weiterer Additive.

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat Trimethylolpropan-tri(meth)acrylat, Triallyltrimellithat, Ethylenglycoldimethacrylat, Butandioldimethacrylat, Trimetylolpropantrimethacrylat, Zn-diacrylat, Zn-dimethacrylat, 1,2-Polybutadien oder N,N'-m-phenylendimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen Nitrilkautschuke aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (ZSMC), Tellurdiethyldithio-carbamat, Nickeldibutyldithioc'ärbaffiatrNickeldi'methyldithiocarbamat und Zinkdiisononyldithio-carbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),

Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzothiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste $C_2$ bis $C_{16}$), Kupferdialkyldithiophosphate (Kettenlänge der Alkylreste $C_2$ bis $C_{16}$) und Dithiophoshorylpolysulfid.

Als Caprolactam kann beispielsweise Dithio-bis-caprolactam eingesetzt werden.

Als Thioharnstoffderivate können beispielsweise N,N'-Diphenylthiohartistoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiuraanmonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithio-biscaprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Daneben können auch Anvulkanisationsverzögerer eingesetzt werden. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäße Nitrilkautschuk auch mit weiteren üblichen Kautschukadditiven gemischt werden.

Diese schließen beispielsweise die typischen und dem Fachmann hinlänglich bekannten Substanzen wie Füllstoffe, Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel ein.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxyethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des Nitrilkautschuks.

Als **Alterungsschutzmittel** können den vulkanisierbaren Mischungen diejenigen zugesetzt werden, die bereits im Zusammenhang mit der Latexkoagulation in dieser Anmeldung beschrieben werden. Sie werden üblicherweise in Mengen von ca. 0 bis 5 phr, bevorzugt 0,5 bis 3 phr, bezogen auf 100 phr des Nitrilkautschuks eingesetzt.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr des Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner ein Verfahren zur Herstellung von Formteilen auf Basis mindestens eines erfindungsgemäßen Nitrilkautschuks, welches dadurch gekennzeichnet ist, dass man die zuvor beschriebene vulkanisierbare Mischung in einem Formgebungsverfahren, bevorzugt unter Anwendung des Spritzgusses, vulkanisiert.

**Gegenstand der Erfindung** ist somit ebenso das Formteil, welches erhältlich ist durch das vorgenannte Vulkanisationsverfahren.

Durch dieses Verfahren können eine Vielzahl von Formteilen hergestellt werden, insbesondere Dichtungen, Kappen, Schläuche oder Membranen. Insbesondere eignen sich die erfindungsgemäßen Nitrilkautschuke zur Herstellung einer O-Ringdichtung, einer Flachdichtung, eines Wellendichtrings, einer Dichtmanschette, einer Dichtkappe, eines Ölkühlerschlauchs, eines Servolenkschlauchs, eines Klimaanlagenschlauchs, eines Thermoisolierschlauchs und von Membranen beispielsweise für Hydrolager oder Membranpumpen.

Alternativ zur unmittelbaren Herstellung von Formteilen auf Basis des erfindungsgemäßen Nitrilkautschuks ist es auch möglich, dass sich an die Herstellung des erfindungsgemäßen Nitrilkautschuks entweder (i) eine Metathese-Reaktion oder (ii) eine Metathese-Reaktion und eine nachfolgenden Hydrierung oder (iii) nur eine Hydrierung anschließt. Diese Metathese bzw. Hydrierungsreaktionen sind beide dem Fachmann hinlänglich bekannt und in der Literatur beschrieben.

Die Metathese ist beispielsweise aus WO-A-02/100941 sowie der WO-A-02/100905 bekannt.

Eine Hydrierung kann unter Einsatz homogener oder heterogener Hydrierkatalysatoren durchgeführt werden. Es ist ferner möglich, die Hydrierung in-situ durchzuführen, d.h. in dem gleichen Reaktionsgefäß, in dem gegebenenfalls zuvor auch der Metathese-Abbau erfolgte und ohne Notwendigkeit den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden **(z.B.**US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515**,** US-A-4,503,196**).**

Geeignete Katalysatoren und Lösungsmittel für eine Hydrierung in homogener Phase werden im Folgenden beschrieben und sind auch aus DE-A-25 39132 und der EP-A-0 471 250 bekannt

Die selektive Hydrierung kann beispielsweise in Gegenwart eines Rhodium- oder Rutheniumhaltigen Katalysators erreicht werden. Einsetzbar ist beispielsweise ein Katalysator der allgemeinen Formel

$$(R^1{}_mB)_1MX_n.$$

worin M Ruthenium oder Rhodium ist, $R^1$ gleich oder verschieden sind und eine $C_1$-$C_8$ Alkylgruppe, eine $C_4$-$C_8$ Cycloalkylgruppe, eine $C_6$-$C_{15}$ Aryl-Gruppe oder eine $C_7$-$C_{15}$ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel $(C_6H_5)_3P)_4RhH$ und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel $R^1{}_mB$ ist, wobei $R^1$, m und B die zuvor für den Katalysator genannten Bedeutungen besitzen. Bevorzugt ist m gleich 3, B gleich Phosphor und die Reste $R^1$ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315**.** Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus **US-A-6,683,136** hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Die nach der Metathese- und/oder Hydrierungsreaktion der erfindungsgemäßen Nitrilkautschuke erhaltenen gegebenenfalls hydrierten Nitrilkautschuke können analog zu den erfindungsgemäßen Nitrilkautschuken in vulkanisierbare Zusammensetzungen eingebracht werden und zur Herstellung von Vulkanisaten und Formteilen auf Basis solcher Vulkanisate verwendet werden. Diese gegebenenfalls hydrierten Nitrilkautschuke weisen Mooney-Viskositäten (ML (1+4 @100°C)) von 1 bis 50, vorzugsweise von 1 bis 40 Mooneyeinheiten auf.

## BEISPIELE

### I Chlor-Gehalt

Der Chlorgehalt der erfindungsgemäßen Nitrilkautschuke wird wie folgt in Anlehnung an DIN EN 14582, Verfahren A bestimmt: Die Nitrilkautschuk-Probe wird in einem Druckgefäß nach Parr in einer Schmelze aus Natriumperoxid und Kaliumnitrat aufgeschlossen. Zu der entstehenden Schmelze wird Sulfitlösung zugegeben und mit Schwefelsäure angesäuert. In der dabei erhaltenen Lösung wird das entstandene Chlorid durch eine potentiometrische Titration mit Silbernitratlösung bestimmt und als Chlor berechnet.

### II Lagerstabilität

Die getrockneten NBR-Kautschuke wurden durch die Mooney-Viskosität vor und nach einer Heißluftlagerung für 48 Stunden bei 100°C charakterisiert, d. h. die Bestimmung der Mooney-Viskosität erfolgte einmal direkt nach der Trocknung (d. h. vor der Heißluftlagerung) sowie anschließend nach 48stündiger Heißluftalterung bei 100°C.

### III Anvulkanisationverhalten und Vulkanisationsaeschwindigkeit

Das Anvulkanisationsverhalten (Mooneyscorch) wird mit Hilfe eines Scherscheibenviskosimeters nach DIN 53 523 bei 120°C bestimmt. Für die Bestimmung wird ein kleiner Rotor (S) verwendet. MS 5 (120°C) bedeutet die Zeit in min, in der der Mooneywert um 5 MooneyEinheiten gegenüber dem Minimalwert ansteigt.

Die **Vulkanisationsgeschwindigkeit** wird nach DIN 53 529, Teil 3 bei 160°C mit Hilfe eines Rheometers der Firma Monsanto (MDR 2000E) als Differenz von $t_{90}$ - $t_{10}$ bestimmt, wobei $t_{10}$ und $t_{90}$ die Vulkanisationszeiten sind, bei denen 10 % bzw. 90% des Endvulkanisationsgrades erreicht sind.

### IV Mechanische Eigenschaften

Die **mechanischen Eigenschaften** der Kautschuke (wie Spannungswert bei verschiedenen Dehnungen, Reißfestigkeit und Bruchdehnung) werden an Vulkanisaten nach DIN 53 504 bestimmt.

### V Metallkorrosivität

Die Bestimmung der Metallkorrosivität erfolgte optisch durch Beurteilung der Oberflächenqualität von zwei Aluminiumplatten, zwischen die ein NBR-Dichtring eingespannt war, wobei der so eingespannte Dichtring 6 Wochen bei 70°C bei 80% relativer Luftfeuchtigkeit gelagert wurde. Soweit in den nachfolgenden Beispielen oder Tabellen die Abkürzung "RT" angegeben ist, bedeutet dies eine Temperatur von 20°C +/- 2°C.

Bei den nachfolgenden Beispielen wurden zwei Nitilkautschuk-Latices mit Acrylnitrilgehalten von 28,1 Gew. % Acrylnitril (Latex A) und 33,2 Gew. % Acrylnitril (Latex B) eingesetzt, die nach folgenden Vorschriften hergestellt wurden.

**Tabelle 1: Bestandteile der Rezepturen für die Herstellung der Nitrilkautschuklatices A und B und Polymerisationsbedingungen**

| Latex-Bezeichnung: | A | B |
|---|---|---|
| Butadien | 65 | 73 |
| Acrylnitril | 35 | 27 |
| Gesamt-Wassermenge | 200 | 190 |
| Erkantol® BXG 1) | 3,67 | 3,69 |
| Baykanol® PQ 2) | 1,10 | 1,10 |
| K-Salz der Kokosfettsäure | 0,73 | 0,73 |
| KOH | 0,05 | 0,05 |
| t-DDM3) | 0,24 / 0,24 | 0,24/0,24 |
| Kaliumperoxodisulfat 4) | 0,39 / 0,20 | 0,39/0,19 |
| Tris-($\alpha$-hydroxy-ethyl)-amin5) | 0,57 | 0,57 |

(fortgesetzt)

| Latex-Bezeichnung: | A | B |
|---|---|---|
| Polymerisationstemperatur [°C] | 18 | 17 |
| Polymerisationsumsatz [%] | 80 | 75 |
| Polymerisationszeit [h] | 10 | 11 |
| 1) Natriumsalz von mono- und disulfonierten Naphthalinsulfonsäuren, die Isobutylenoligomerreste enthalten (Erkantol® BXG)<br>2) Natriumsalz von Methlyen-bis-Naphthalinsulfonat (Baykanol® PQ; Lanxess Deutschland GmbH)<br>3) t-DDM: (tertiäres Dodecylmercaptan); Lanxess Deutschland GmbH<br>4) Aldrich Bestell-Nr. : 21,622-4<br>5) Aldrich Besteli-Nr. : T5,830-0 | | |

Bei der Herstellung der Latices A und B wurde jeweils die gesamte Menge der Monomeren Butadien und Acrylnitril im Reaktor vorgelegt. Die Gesamtmenge an t-DDM und an Kaliumperoxodisulfat wurden aufgeteilt, wobei Teilmengen zu Polymerisationsbeginn im Reaktor vorgelegt (jeweils erste in Tabelle 1 angegebene Teilmenge) und bei einem Polymerisationsumsatz von 15 % in den Reaktor dosiert wurden (jeweils zweite in Tabelle 1 angegebene Teilmenge).

Bei Erreichen der in Tabelle 1) angegebenen Umsätze wurden die Polymerisationen abgestoppt. Hierzu wurden die in Tabelle 2) beschriebenen Polymerisationsinhibitoren verwendet.

**Tabelle 2: Abstoppung der Polymeriationen**

| Latex- Bezeichnung: | A | B |
|---|---|---|
| Na-Dithionit6) | 1,20 | - |
| Diethylhydroxylamin | - | 1,0 |
| Kaliumhydroxid | 1,28 | 1,28 |
| 6) Aldrich Bestell-Nr. : 15,795-3 | | |

Nach Entfernung der nicht umgesetzten Monomeren durch Wasserdampfdestillation sowie nach Zusatz von 1,0 Gew.-Teilen 2,6-Di-tert.butyl-p-kresol (Vulkanox® KB der Lanxess Deutschland GmbH) bezogen auf den Nitrilkautschuk, wiesen die beiden Latices folgende Eigenschaften auf **(Tabelle 3).**

**Tabelle 3: Eigenschaften der Latices A und B**

| Latex-Bezeichnung: | A | B |
|---|---|---|
| Teilchendurchmesser ($d_{50}$) [nm] | 28 | 36 |
| Feststoffgehalt [Gew.%] | 20,3 | 19,6 |
| pH-Wert | 9,9 | 9,3 |
| Acrylnitrilgehalt [Gew. %] | 33,2 | 28,1 |

In den nachfolgend beschriebenen **Beispielserien 1, 2, 3 und 5** wurde **Latex A** und für **Beispielserie 4 Latex B** verwendet.

In den **Beispielserien 1 - 5** wurden die in **Tabelle 4** genannten ganz- oder teilverseiften Polyvinylacetat (PVA) Typen eingesetzt. Alle genannten Polyviol Typen sind von der Wacker Chemie GmbH erhältlich, die Mowiol Typen z.B. von Kremer Pigmente GmbH & Co. KG.

**Tabelle 4: Eingesetzte Polyvinylacetattypen und deren Eigenschaften**

| Produktbezeichnung | Verseifungszahl1) [mg KOH/g PVA] | Viskosität der Polyvinylacetatlösung (4%ige Lösung bei 20°C)2) [cP] |
|---|---|---|
| Polyviol W 30/240 | 240 | 30 |

(fortgesetzt)

| Produktbezeichnung | Verseifungszahl[1)] [mg KOH/g PVA] | Viskosität der Polyvinylacetatlösung (4%ige Lösung bei 20°C)[2)] [cP] |
|---|---|---|
| Polyviol W 25 / 240 | 240 | 25 |
| Polyviol W 25/ 190 | 190 | 25 |
| Polyviol V03 /140 | 140 | 3 |
| Mowiol 4-88 | 140 | 4 |
| Polyviol M05/140 | 140 | 5 |
| Polyviol M 13 / 140 | 140 | 13 |
| Polyviol W25/140 | 140 | 25 |
| Mowiol 26 / 88 | 140 | 40 |
| Polyviol W40 /140 | 140 | 40 |
| Mowiol 40 - 88 | 140 | 40 |
| Mowiol 4-98 | 20 | 4 |
| Polyviol 28 / 20 | 20 | 28 |
| Mowiol 56 - 98 | 15 | 36 |
| Mowiol 28 - 99 | 8 | 28 |
| Mowiol 66 - 100 | 4 | 66 |

1) Houben Weyl: Methoden der Organischen Chemie, 4. Auflage, Band 2, Analytische Methoden, Georg Thieme Verlag (1953)
2) DIN 53015

In den **Beispielserien 1, 2 und 3 (Tabellen 5, 6 und 7)** wird gezeigt, dass durch Verwendung von PVA die für eine quantitative Latexkoagulation minimal notwendige Salzmenge deutlich reduziert wird. In der **Beispielserie 4 (Tabelle 8)** wird gezeigt, dass die auf diese Weise hergestellten Nitrilkautschuke eine rasche Vulkanisation und gute Vulkanisateigenschaften aufweisen. In der **Beispielsserie 5 (Tabelle 9)** wird gezeigt, dass bei Verwendung von gegebenenfalls ganz oder teilweise hydrolysiertem Polyvinylacetat als Cofällmittel Nitrilkautschuke mit speziellen Chlor-Gehalten erhalten werden, die im vulkanisierten Zustand eine niedrige Metallkorrosivität aufweisen.

In den **Beispielserien 1, 2 und 3** wurden für die Latexkoagulation die von den verschiedenen PVA-Typen jeweils minimal notwendigen Mengen ermittelt, die neben der jeweiligen Salzmenge zur quantitativen Latexkoagulation erforderlich war.

**Beispielserie 1: NBR-Latexkoagulation mit $MgCl_2$ und PVA (Zuerst Zugabe von $MgCl_2$ bei 20°C, danach Zugabe von PVA bei 90°C)**

In **Beispielserie 1** wurde zum **Latex A** (200g) zunächst bei 20°C eine 20%ige wässrige Lösung des Fällmittels Magnesiumchlorid zugegeben und anschließend bei 90°C eine Lösung von PVA (4 Gew. % in entionisiertem Wasser) zugesetzt.

Bei dem nicht erfindungsgemäßen Vergleichsversuch (ohne PVA) war für eine quantitative Latexkoagulation eine Menge von 1,31 Gew. % Magnesiumchlorid notwendig. Bei den erfindungsgemäßen Beispielen der Beispielserie 1 wurden jeweils 0,87 Gew. % $MgCl_2$ eingesetzt, was für eine quantitative Latexkoagulation nicht ausreichend war und die für eine quantitative Latexkoagulation minimal notwendigen Mengen an PVA ermittelt.

**Tabelle 5: Beispielserie 1**

| Nr. | eingesetztes Polyvinylacetat | $MgCl_2$ [Gew.%] | PVA-Menge bzw. auf NBR [Gew.%] |
|---|---|---|---|
| **Vergleichsversuch** | - | 1,31 | - |
| **1.1** | Polyviol W 30/ 240 | 0,87 | 0,5 |

(fortgesetzt)

| Nr. | eingesetztes Polyvinylacetat | $MgCl_2$ [Gew.%] | PVA-Menge bzw. auf NBR [Gew.%] |
|---|---|---|---|
| **1.2** | Polyviol W 25 / 240 | 0,87 | 0,5 |
| **1.3** | Polyviol W 25/190 | 0,87 | 0,5 |
| **1.4** | Polyviol V03 /140 | 0,87 | 3,5 |
| **1.5** | Mowiol 4-88 | 0,87 | 2,5 |
| **1.6** | Polyviol M05/140 | 0,87 | 1,0 |
| **1.7** | Polyviol M13 / 140 | 0,87 | 0,5 |
| **1.8** | Polyviol W25/140 | 0,87 | 0,5 |
| **1.9** | Mowiol 26/88 | 0,87 | 0,6 |
| **1.10** | Polyviol W40 / 140 | 0,87 | 1,5 |
| **1.11** | Mowiol 40 - 88 | 0,87 | 1,5 |
| **1.12** | Mowiol 4-98 | 0,87 | 2,0 |
| **1.13** | Polyviol 28 / 20 | 0,87 | 1,0 |
| **1.14** | Mowiol 56 - 98 | 0,87 | 0,7 |
| **1.15** | Mowiol 28 - 99 | 0,87 | 0,7 |
| **1.16** | Mowiol 66 - 100 | 0,87 | 0,7 |

**Beispielsserie 2: NBR-Latexkoagulation mit $MgCl_2$ und PVA (gleichzeitige Zugabe von $MgCl_2$ und PVA bei 20°C und anschließende Erwärmung auf 90°C)**

In der **Beispielserie 2)** wurden dem Latex A (200g) eine wässrige Lösung zudosiert, die sowohl das Fällmittel Magnesiumchlorid als auch die PVA enthielt Die Zugabe der Fällmittellösung zum Latexs erfolgte bei 20°C, wobei die Menge an $MgCl_2$ konstant gehalten wurde. Anschließend wurde das Gemisch auf 90°C unter Rühren erhitzt. In den Versuchen der **Beispielserie 2** wurden die für eine quantiative Latexkoagulation notwendigen Mengen an PVA ermittelt. Diese PVA-Mengen sind in nachfolgender Tabelle dokumentiert.

**Tabelle 6: Beispielsserie 2**

| Nr. | eingesetztes Polyvinylacetat | $MgCl_2$ [Gew.%] | PVA-Menge bzw. auf NBR [Gew.%] |
|---|---|---|---|
| **Vergleichsversuch** | - | 1,31 | - |
| **2.1** | Polyviol W 30/240 | 0,87 | 1,1 |
| **2.2** | Polyviol W 25 / 240 | 0,87 | 1,5 |
| **2.3** | Polyviol W 25/ 190 | 0,87 | 1,5 |
| **2.4** | Polyviol V03 /140 | 0,87 | 5,0 |
| **2.5** | Mowiol 4-88 | 0,87 | 3,0 |
| **2.6** | Polyviol M05/140 | 0,87 | 1,0 |
| **2.7** | Polyviol M13 / 140 | 0,87 | 0,8 |
| **2.8** | Polyviol W25/140 | 0,87 | 0,5 |
| **2.9** | Mowiol 26 / 88 | 0,87 | 1,1 |
| **2.10** | Polyviol W40 / 140 | 0,87 | 1,7 |
| **2.11** | Mowiol 40 - 88 | 0,87 | 1,7 |

(fortgesetzt)

| Nr. | eingesetztes Polyvinylacetat | $MgCl_2$ [Gew.%] | PVA-Menge bzw. auf NBR [Gew.%] |
|---|---|---|---|
| **2.12** | Mowiol 4-98 | 0,87 | 3,0 |
| **2.13** | Polyviol 28 / 20 | 0,87 | 1,5 |
| **2.14** | Mowiol 56 - 98 | 0,87 | 1,5 |
| **2.15** | Mowiol 28 - 99 | 0,87 | 1,0 |
| **2.16** | Mowiol 66 - 100 | 0,87 | 1,3 |

**Beispielsserie 3: NBR-Latexkoagulation unter Verwendung von PVA (vor und nach 10 wöchiger Lagerung der wässrigen PVA-Lösungen)**

In der **Beispielserie 3** wird der Einfluss der Standzeit der wässrigen PVA-Lösung demonstriert. Die Versuche dieser Serie wurden wie bei der Beispielserie 1 beschrieben durchgeführt und zwar jeweils vor und nach einer 10 wöchigen Lagerung der wässrigen PVA-Lösung.

**Tabelle 7: Beispielserie 3**

| Nr. | eingesetztes Polyvinylacetat | Verseifungs-Zahl [mg KOH/g PVA] | Viskosität (4%ige Lösung bei 20°C) [cp] | Standzeit [Wochen] | $MgCl_2$ [Gew.%] | PVA-Menge bez. auf NBR [Gew.%] |
|---|---|---|---|---|---|---|
| 3.1 | Polyviol W 25 / 240 | 240 | 25 | 0 | 0,87 | 0,5 |
| 3.2 | Polyviol W 25 / 240 | 240 | 25 | 10 | 0,87 | 1,0 |
| 3.3 | Polyviol W 25/ 190 | 190 | 25 | 0 | 0,87 | 0,5 |
| 3.4 | Polyviol W 25/ 190 | 190 | 25 | 10 | 0,87 | 1,0 |

Die Ergebnisse der Tabelle 7 zeigen, dass es etwas vorteilhafter ist, die PVA Lösungen ohne längere Lagerung einzusetzen.

**Beispielserie 4: Eigenschaftsvergleiche für Nitrilkautschuk,**

**a) der erfindungsgemäß durch Latex-Koagulation mit $MgCl_2$/PVA aufgearbeitet wurde (Versuch 4.4) bzw.**

**b) nicht erfindungsgemäß aufgearbeitet wurde (Versuche V4.1, V 4.2., V 4.3.)**

In **Beispielserie 4** wurde der Nitrilkautschuk **Latex B** erfindungsgemäß unter Einsatz von $MgCl_2$ und PVA (Versuch 4.4) oder aber in den nicht erfindungsgemäßen Versuchen 4.1, 4.2, und 4.3 mit NaCl (V4.1), Magnesiumchlorid (V4.2) bzw. in V4.3 mit Magnesiumchlorid/Methylcellulose ("MC"; Methocel EXP XZ der Firma Dow) gemäß der Lehre aus DE-OS 23 32 096 koaguliert.

Für die Latexkoagulation der **Beispielserie 4** wurden die in der nachfolgenden Tabelle dokumentierten Mengen an Fällmittel und an Cofällmittel eingesetzt. Beim erfindungsgemäßen Versuch 4.4 erfolgte die Zugabe von $MgCl_2$ und PVA (Mowiol 66-100) gemeinsam in einer Lösung bei 23°C wie in nachfolgender Tabelle beschrieben. Die bei der Koagulation erhaltenen Kautschukkrümel wurden jeweils gewaschen, entwässert und getrocknet.

Für die Latexkoagulation wurden jeweils 25 kg Latex zum Feststoff aufgearbeitet. Die Latexkoagulation erfolgte diskontinuierlich in einem rührbaren, offenen Behälter mit 100 l Fassungsvermögen. Für die Herstellung der Salzlösungen wurde ausschließlich ionenhaltiges Brauchwasser (BW) verwendet. Die Konzentration der Salzlösung sowie die für die Fällung eingesetzten Salzmengen wurden jeweils ohne Kristallwasser berechnet. Die bei der Latexkoagulation verwendeten Salze, die Konzentration der Salzlösungen; die bezogen auf den NBR Kautschuk eingesetzten Salzmengen, die Koagulationstemperatur, die Temperatur bei der Wäsche sowie die Dauer der Wäsche etc. sind in den nachfolgenden Tabellen aufgelistet.

Die Mengen ans Salz und Cofällmittel wurden jeweils in Vorversuchen so ausgelegt, dass die bei der Latexkoagulation entstehenden Kautschukkrümel größer als 5 mm waren, damit sie bei der nachfolgenden Krümelwäsche nicht ausgetragen wurden. Für die Krümelwäsche war der 100 1-Koagulationsbehälter mit einem Zu- und Abfluss versehen. An der Innenseite des Behälters waren zwei Schienen so angebracht, dass der Abfluss mittels eines Siebes (Maschenweite 2 mm) vor der Durchführung der Wäsche abgesperrt werden konnte, so dass die koagulierten Krümel bei der Wäsche nicht ausgeschwemmt wurden. Die Wäsche wurde mit einem konstanten Wasserdurchsatz von 200 l/h durchgeführt.

Bei den Versuchen wurde das bei der Latexkoagulation anfallende Latexserum vor Beginn der Wäsche nicht aus dem Koagulationsbehälter entfernt; d.h. das Latexserum wurde durch Verdünnungswäsche entfernt. Die Krümelwäsche wurde bei 60°C für 5 Stunden unter Einsatz von nicht entionisiertem Wasser durchgeführt. Nach Beendigung der Wäsche wurden die Kautschukkrümel mit einem Sieb entnommen, in einer Weldingschnecke vorentwässert und diskontinuierlich in einem Vakuumtrockenschrank bei 70°C auf eine Restfeuchte von < 1,5 Gew. % getrocknet.

**<u>Tabelle 8:</u> Beispielserie 4: Bedingungen bei der Latexkoagulation**

| Nr. | Bedingungen der Latexkoagulation | | | | | |
|---|---|---|---|---|---|---|
| | **Fällmittel** | **Salzmenge bez. auf NBR [Gew. %]** | **Menge an Methylcellulose bez. auf NBR [Gew. %]** | **Menge an PVA bez. auf NBR [Gew. %]** | **Latex-Temperatur bei Salz- Zugabe [°C]** | **Temperatur nach Erwärmung [°C]** |
| **V4.1** | NaCl | 31,8 | - | - | 23 | 90 |
| **V4.2** | $MgCl_2$ | 2,0 | - | - | 23 | 90 |
| **V4.3** | $MgCl_2$/MC * | 1,0 | 0,8 | - | 23 | 90 |
| **4.4** | $MgCl_2$/PVA** | 1,0 | - | 1,0 | 23 | 90 |

* MC bedeutet Methylcellulose
** Mowiol 66-100

Nach Abschluss der Latexkoagulation (vor Beginn der Wäsche) wurden vom Latexserum ca. 200 g entnommen und zur vollständigen Entfernung von Polymerresten ½h unter Rückfluss gekocht und über ein 20μ-Sieb filtriert. Die Bestimmung des CSB-Werts des Serums ($CSB_{Serum}$) wurde nach DIN 38 409, Teil 41 bzw. H 41-1 und H 41-2 durch Bestimmung des Verbrauchs an Kaliumdichromat in schwefelsaurem Milieu in Gegenwart eines Silbersulfatkatalysators durchgeführt. Ausgehend vom CSB-Wert des Serums ($CSB_{Serum}$) wurde der im Serum verbleibende CSB-Wert bezogen auf 1 kg des koagulierten Nitrilkautschuks ($CSB_{NBR}$) mit Hilfe der in der Beschreibung angegebenen Gleichungen berechnet.

**<u>Tabelle 9:</u> Beispielserie 4**

| CSB-Werte | | | | | |
|---|---|---|---|---|---|
| **Beispiel** | **Fällmittel** | **FS (Latex B) [Gew.%]** | **$m_{FM}$ [$g_{FM}$//$kg_{Latex}$]** | **$CSB_{Serum}$ [$gO_2/kg_{Serum}$]** | **$CSB_{NBR}$ [$gO_2/kg_{NBR}$]** |
| **V4.1** | NaCl | 19,6 | 0,240 | 49,0 | 261 |
| **V4.2** | $MgCl_2$ | 19,6 | 0,020 | 57,2 | 240 |
| **V4.3** | $MgCl_2$/MC | 19,6 | 0,322 | 60,4 | 232 |
| **4.4** | $MgCl_2$/PVA | 19,6 | 0,060 | 60,6 | 267 |

Wie man in o. g. Tabelle sieht, gelangt bei der erfindungsgemäßen Latexkoagulation (Beispiel 4.4) eine größere Menge an niedermolekularen Begleitstoffen bezogen auf Nitrilkautschuk ($CSB_{NBR}$) in das Latexserum. Der erfindungsgemäß koagulierte Nitrilkautschuk weist daher eine größere Reinheit als die nach dem Stand der Technik koagulierten Nitrilkautschuke auf.

Von den getrockneten NBR-Kautschuken wurden Mooney-Viskositäten vor und nach Heißluftlagerung nach DIN 53 523 bei 100°C [ML 1+4 (100°C)] bestimmt. Die Mooneywerte werden in der Dimension Moooneyeinheiten, abgekürzt ME angegeben.

Für die Heißluftalterung (HLA) wurden Mooneyfelle einer 48stündigen Lagerung bei 100°C in einem Umlufttrockenschrank unterzogen. Die Differenz der Mooneyviskositäten ("LS"= MV2-MV1) nach und vor HLA ist ein Maß für die

Lagerstabilität der NBR-Kautschuke. Für eine ausreichende Lagerstabilität ist eine Differenz der Mooneyviskosit nach und vor Heißluftlagerung ≤ 5 ME notwendig.

Die Bestimmung des Aschegehalts bzw. des Glührückstands erfolgte nach DIN 53568, Teil 1 bei einer Temperatur von 800°C.

**Tabelle 10: Beispielserie 4**

| Lagerstabilität und Aschegehalt des erfindungsgemäßen Nitrilkautschuks 4.4 im Vergleich mit dem Stand der Technik (V4.1,V 4.2 und V4.3) | | | | | |
|---|---|---|---|---|---|
| **Nr.** | **Fällmittel** | **Aschegehalt [Gew.%]** | **ML(1+4@100°C) [ME]** | | |
| | | | **MV1 [ME]** | **MV2 [ME]** | **LS [ME]** |
| **V4.1** | NaCl | 0,2 | 43 | 48 | 5 |
| **V4.2** | $MgCl_2$ | 0,2 | 43 | 44 | 1 |
| **V4.3** | $MgCl_2$/MC | 0,3 | 43 | 45 | 2 |
| **4.4** | $MgCl_2$/PVA | 0,3 | 43 | 45 | 2 |

In **Tabelle 10** wird gezeigt, dass bei erfindungsgemäßer Latexkoagulation die Lagerstabilität des Nitrilkautschuks wie gewünscht gut ist (Änderung der Mooneyviskosität bei 48ständiger Lagerung bei 100°C von maximal 5ME).

Auf der Basis der Nitrilkautschuke der **Beispielserie 4** wurden in einem 1,5 1 Laborinnenmischer Mischungen hergestellt, wobei die einzelnen Mischungsbestandteile in der in der angegebenen Reihenfolge gemischt wurden. Sämtliche Mischungsbestandteile sind in Gewicht-Teilen bezogen auf 100 Gewichts-Teile des Nitrilkautschuks bezogen.

**Tabelle 11: Beispielserie** 4

| Zusammensetzung der Kautschukmischungen | |
|---|---|
| **Mischungsbestandteile** | **Menge in Gew.- Teilen** |
| Nitrilkautschuke der Beispielserie 4 | 100,0 |
| Stearinsäure | 2,0 |
| Zinkoxid | 5,0 |
| Ruß N 330 | 40,0 |
| Phenol/Formaldehyd-Harz (Plastikator® FH; Lanxess Deutschland GmbH) | 5,0 |
| N-Cyclohexyl-benzthiazylsulfenamid (Vulkacit® CZ; Lanxess Deutschland GmbH) | 0,9 |
| Schwefel | 1,5 |

Das Vulkanisationsverhalten der Mischungen wurde im Rheometer bei 160°C nach DIN 53 529 mit Hilfe des Monsantorheometers MDR 2000E bestimmt. Auf diese Weise wurden die charakteristischen Vulkanisationszeiten $t_{10}$ und $t_{90}$ bestimmt.

Nach DIN 53 529, Teil 3 bedeuten:

$t_{10}$: Zeit, bei der 10% des Umsatzes erreicht sind

$t_{90}$: Zeit, bei der 90% des Umsatzes erreicht sind

Die Herstellung der für die weiteren Messungen notwendigen vulkanisierten Prüfkörper erfolgte in der Presse unter einem Hydraulikdruck von 120 bar 30 min bei 160°C vulkanisiert. An den Vulkanisaten wurden mittels Zugversuches nach DIN 53504 der Spannungswert bei 300 % Dehnung ($\sigma_{300}$), die Zugfestigkeit ($\sigma_{max}$) und die Bruchdehnung ($\varepsilon_b$) bestimmt.

**Tabelle 12: Beispielserie 4**

| Vulkanisateigenschaften des erfindungsgemäß hergestellten Nitrilkautschuks 4.4 und der Vergleichsbeispiele 4.1, 4.2, und 4.3 | | | | | | | | |
|---|---|---|---|---|---|---|---|---|
| **Nr.** | **Fällmittel** | **Vulkanisation** | | | | **Vulkanisateigenschaften** | | |
| | | **MS 5 (120°C) [min]** | **$t_{10}$ [sec]** | **$t_{90}$ [sec]** | **$t_{90}$-$t_{10}$ [sec]** | **$\sigma_{300}$ [MPa]** | **$\sigma_{max.}$ [MPa]** | **ab [%]** |
| **V4.1** | NaCl | 49 | 7,5 | 13,2 | 5,7 | 8,1 | 21,9 | 565 |
| **V4.2** | $MgCl_2$ | 52 | 8,0 | 13,3 | 5,3 | 8,2 | 23,7 | 608 |
| **V4.3** | $MgCl_2$/MC | 55 | 7,9 | 13,9 | 6,0 | 7,7 | 22,7 | 622 |
| **4.4** | $MgCl_2$/PVA | 57 | 7,7 | 13,2 | 5,5 | 8,1 | 22,9 | 598 |

Wie man in o. g. sieht, hat der erfindungsgemäß hergestellte NBR 4.4. die längste Scorchzeit (MS 5) und weist somit die höchste Verarbeitungssicherheit auf. Gleichzeitig ist beim erfindungsgemäß hergestellten NBR (4.4) die Vulkanisationsgeschwindigkeit ($t_{90}$-$t_{10}$) am höchsten. Die übrigen Vulkanisateigenschaften von 4.4. sind vergleichbar mit den mit Hilfe von NaCl (4.1) und mit $MgCl_2$ (4.2) koagulierten Latices, wobei $\sigma_{300}$ bei NBR 4.4 signifikant besser als bei NBR 4.3 ist, der mit Hilfe von Methylcellulose koaguliert wurde.

**Beispielserie 5: Herstellung von Nitrilkautschuken zur Prüfung der Korrosivität (5.1-5.4: NBR-Latexkoagulation mit verschiedenen Salzen und PVA; Separate Zugabe von Salz und PVA; Erwärmung der Reaktionsmischung nach Salzzugabe auf Temperaturen > 80°C V5.5: NBR-Latexkoagulation ohne PVA mit $MgCl_2$ und Gelatine)**

Die Herstellung der in Beispielserie 5 eingesetzten erfindungsgemäßen Nitrilkautschuke 5.1, 5.2, 5.3 und 5.4 erfolgte jeweils mit 25 1 Latex, wobei **Latex A** eingesetzt wurde. Latex A wurde außerdem vor dem Zusatz der Salzlösungen mit entionisiertem Wasser auf Feststoffkonzentrationen im Bereich 10-15 Gew. % (siehe **Tabelle 13)** verdünnt. Bei den erfindungsgemäßen Versuchen dieser Versuchsserie wurden die wässrigen Lösungen von Magnesiumchlorid bzw. Magnesiumchlorid und PVA separat zum Latex gegeben. Die Konzentration der Salzlösungen betrug jeweils 5 Gew. %. Die Zugabe zum Latex erfolgte bei 23°C. Nach Erwärmung des Reaktionsgemischs auf Temperaturen >80°C wurden die in der Tabelle angegebenen PVA-Typen als verdünnte wässrige Lösungen (4 Gew.%) zugesetzt

Nach Abschluss der Latexkoagulation wurden die Kautschukkrümel mit einem Sieb entfernt und unter den in der Tabelle angegebenen Bedingungen gewaschen.

Nach Beendigung der Wäsche wurden die Kautschukkrümel mit einem Sieb entnommen, in einer Weldingschnecke vorentwässert und diskontinuierlich in einem Vakuumtrockenschrank bei 70°C auf eine Restfeuchte von < 1,5 Gew. % getrocknet.

Für Vergleichsbeispiel V5.5 wurde zur Latexkoagulation kein PVA eingesetzt, sondern vielmehr eine wässrige, gelatinehaltige Magnesiumchloridlösung verwendet, die 5 Gew.% $MgCl_2$ enthielt. Als Gelatine wurde eine sauer geäscherte Gelatine (Viskosität in 10%iger wässriger Lösung: 92,1 cP; Isoelektrischer Punkt: 8,7) verwendet, die vor der Latexkoagulation in der Magnesiumchloridlösung gelöst wurde. Die sonstigen Rahmenbedingungen für die Latexkoagulation und Krümelwäsche waren identisch zur o.g. Beschreibung für die Beispielserie 5.

Tabelle 13: Beispielserie 5: Bedingungen bei der Latexkoagulation

| Nr. | Feststoffgehalt des Latex [Gew.%] | PVA-Typ | Salzart und Menge bez. auf NBR [Gew.%] | PVA-Menge bzg. auf NBR [Gew.%] | Krümelwäsche | | | Chlorgehalt [ppm] |
|---|---|---|---|---|---|---|---|---|
| | | | | | Wasserart | T [°C] | Zeit [h] | |
| **5.1** | 14,9 | Mowiol 66-100 | $Mg_2SO_4$/1,0 | 1,0 | BW | 90 | 5 | 5 |
| **5.2** | 10,3 | Mowiol 25/140 | $MgCl_2$/0,9 | 0,6 | BW | 90 | 5 | 12 |
| **5.3** | 12,7 | Polyviol W 05/140 | $MgCl_2$/0,9 | 0,5 | BW | 90 | 5 | 21 |
| **5.4** | 13,7 | Mowiol 66-100 | $MgCl_2$/0,9 | 0,7 | BW | 80 | 5 | 23 |
| **V5.5** | 14,8 | ---- | $MgCl_2$/0,7 + 200 ppm Gelatine | ---- | BW | 80 | 5 | 75 |

Zur Prüfung der korrosiven Eigenschaften der in **Beispielsserie 5** beschriebenen Nitrilkautschuke wurden die in Tabelle 14 beschriebenen Mischungen hergestellt.

**Tabelle 14: Vulkanisation der Nitrilkautschuke aus Beispielserie 5**

| **Mischungsbestandteile** | **Menge in Gew.-Teilen** |
|---|---|
| Nitrilkautschuke der Beispielserie 5 | 100,0 |
| Ruß N 330 (Statex N 330 von Columbian Carbon) | 40,0 |
| Rhenogran® BPH-80/L (Rheinchemie Rheinau GmbH) | 2,5 |
| Stearinsäure (Edenor C 18 98-100) | 1,0 |
| Polyethylenglykol (Polyglykol 4000 S) | 3,0 |
| Weichmacher (Vulkanol® OT; Lanxess Deutschland GmbH) | 10 |
| N-Cyclohexyl-benzthiazylsulfenamid (Vulkacit®CZ; Lanxess Deutschland GmbH) | 2,0 |
| Schwefel | 2,0 |
| Zinkoxid | 3,0 |

Auf der Basis der in Tabelle 14 genannten Mischungen wurden Platten mit 2 mm Dicke gepresst, die unter einem Druck von 120 bar 15 Minuten bei 160°C vulkanisiert wurden. Aus den vulkanisierten Platten wurden Dichtringe (Außendurchmesser: 38 mm; Innendurchmesser: 20 mm) ausgestanzt.

Zur Prüfung der Korrosion wurden die Dichtringe zwischen zwei sandgestrahlte Aluminiumplatten (Dimension: 50x50x2 mm) eingespannt und 6 Wochen bei 80% relativer Luftfeuchtigkeit bei 70°C in einem Klimaschrank gelagert. Bei sämtlichen manuellen Operationen wurden frische Stoffhandschuhe getragen, um eine Kontamination der Proben mit Hautschweiß zu vermeiden. Als Referenz wurde eine sandgestrahlte Aluminiumplatte unter denselben Bedingungen gelagert.

Die Bewertung der Dichtungskorrosivität erfolgte durch visuelle Beurteilung der Aluminiumplatten mit einer Notenskala von 1 bis 4.

Mit Hilfe der folgenden Abbildungen wird die angewandte Bewertungsskala lediglich exemplarisch verdeutlicht.

Figur 1: Auf der Aluminiumoberfläche ist keinerlei Verfärbung erkennbar (Referenzversuch ohne Dichtring)

Figur 2: **Note 2**
Die Geometrie des Dichtrings ist als leichte Verfärbung auf der Aluminiumoberfläche erkennbar. Die äußere Rand des Dichtrings ist nur stellenweise abgebildet. Der innere Rand ist nicht abgebildet. Auf der Aluminiumoberfläche gibt es keine Ablagerungen und keine Anzeichen für Korrosion. Dichtringe mit dieser Note 2 sind für den Einsatz in der Praxis voll tauglich.

Figur 3: **Note 3**
Die Geometrie des Dichtrings ist als Verfärbung auf der Aluminiumoberfläche abgebildet. Die äußere Kontur des Dichtrings ist vollständig abgebildet. Die Geometrie des inneren Rands des Dichtrings ist erkennbar, aber ohne durchgehende Kontur. Auf der Aluminiumoberfläche gibt es keine Ablagerungen und keine Anzeichen für Korrosion. Dichtringe mit der Note 3 sind für den Einsatz in der Praxis voll tauglich.

Figur 4: **Note 4**
Der Dichtring hinterlässt auf der Aluminiumoberfläche eine Verfärbung mit durchgehenden Konturen sowohl für den äußeren als auch für den inneren Rand des Dichtrings. Auf der Aluminiumoberfläche gibt es jedoch keine Ablagerungen und keine Anzeichen für Korrosion. Dichtringe mit der Note 4 sind für den Einsatz in der Praxis noch tauglich.

Figur 5: **Note 5**
Der Dichtring hinterlässt auf der Aluminiumoberfläche durchgehende Konturen sowohl für den äußeren als auch für den inneren Rand des Dichtrings. Auf der Aluminiumoberfläche gibt es an einigen Stellen Ablagerungen und deutliche Anzeichen von Korrosion. Dichtringe mit der Note 5 sind für den Einsatz in der Praxis nur noch beschränkt tauglich.

Die erfindungsgemäßen Nitrilkautschukproben der Versuche 5.1-5.4 sowie des Vergleichsversuchs V5.5 wurden analog einer optischen Bewertung unterzogen. Das Ergebnis ist in Tabelle 15 dargestellt.

**Tabelle 15: Beispielserie 5**

| Bewertung der Dichtungskorrosivität der Nitrilkautschuke | | | | | |
|---|---|---|---|---|---|
| **Nr.** | **eingesetztes Polyvinylacetat** | **Salzart / Menge [Gew.%]** | **PVA-Menge bzw. auf NBR [Gew.%]** | **Chlor-Gehalt [ppm]** | **Dichtungskorrosivität** |
| **5.1** | Mowiol 66 - 100 | $Mg_2SO_4$/1,0 | 1,0 | 5 | 1,5 |
| **5.2** | Mowiol 26/88 | $MgCl_2$/0,9 | 0,6 | 12 | 1,5 |
| **5.3** | Polyviol W 30/240 | $MgCl_2$/0,9 | 0,5 | 21 | 2,5 |
| **5.4** | Mowiol 66 - 100 | $MgCl_2$/0,9 | 0,7 | 23 | 2 |
| **V 5.5** | --- | $MgCl_2$/0,7 + 200 ppm Gelatine | --- | 75 | 5 |

In Tabelle 15 wird gezeigt, dass auf Basis der erfindungsgemäß hergestellten Nitrilkautschuke der **Beispielserie 5 (5.1 - 5.4)** mit Chlor-Gehalten von 5 bis 23 ppm Vulkanisate ohne nennenswert erkennbare Metallkorrosivität erhalten wurden. Sämtliche erfindungsgemäßen Nitrilkautschuke der **Beispielserie 5** sind für die Herstellung von Dichtringen mit niedriger Metallkorrosivität geeignet. Im Gegensatz dazu führt der Einsatz eines nicht-erfndungsgemäßen Nitrilkautschuks **(V5.5),** der einen zu hohen Chlor-Gehalt aufweist, zu Dichtringen mit einer erheblichen Metallkorrosivität.

## Patentansprüche

**1.** Nitrilkautschuk, welcher Wiederholungseinheiten mindestens eines α,β-ungesättigten Nitrils, mindestens eines konjugierten Diens und gegebenenfalls eines oder mehrerer weiterer copolymerisierbarer Monomere enthält und der einen Chlorgehalt im Bereich von 4 bis 25 ppm bezogen auf den Nitrilkautschuk, bestimmt nach DIN EN 14582, Verfahren A, aufweist.

**2.** Nitrilkautschuk gemäß Anspruch 1 mit einem Chlorgehalt im Bereich von 5 bis 23 ppm.

**3.** Nitrilkautschuk gemäß Anspruch 1 oder 2, der Wiederholungseinheiten von Acrylnitril, 1,3-Butadien und gegebenenfalls einem oder mehreren weiteren copolymerisierbaren Monomeren aufweist.

**4.** Nitrilkautschuk gemäß Anspruch 3, der Wiederholungseinheiten von einer oder mehreren α,β-ungesättigten Mono- oder Dicarbonsäuren, deren Estern oder Amiden aufweist, bevorzugt Wiederholungseinheiten eines Alkylesters einer α,β-ungesättigten Carbonsäure, insbesondere von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat oder Lauryl(meth)acrylat.

**5.** Nitrilkautschuk gemäß einem oder mehreren der Ansprüche 1 bis 4, der eine Mooney-Viskosität (ML (1+4@100°C)) von 10 bis 150, vorzugsweise von 20 bis 100 Mooneyeinheiten aufweist.

**6.** Nitrilkautschuk gemäß einem oder mehreren der Ansprüche 1 bis 5 mit einer Glastemperatur im Bereich von -70°C bis +10°C, vorzugsweise im Bereich von -60°C bis 0°C.

**7.** Nitrilkautschuk gemäß einem oder mehreren der Ansprüche 1 bis 6, der 2,2,4,6,6-Pentamethylheptan-4-thio- und/oder 2,4,4,6,6-Pentamethylheptan-2-thio- und/oder 2,3,4,6,6-Pentamethylheptan-2-thio und/oder 2,3,4,6,6-Pentamethylheptan-3-thio-Endgruppen aufweist.

**8.** Verfahren zur Herstellung von Nitrilkautschuken durch Emulsionspolymerisation mindestens eines α,β-ungesättigten Nitrils, mindestens eines konjugierten Diens und gegebenenfalls eines oder mehrerer weiterer copolymerisierbarer Monomere in Gegenwart eines Molekulargewichtsreglers, wobei der bei der Polymerisation anfallende, den Nitrilkautschuk enthaltende Latex einer Koagulation unterworfen und der koagulierte Nitrilkautschuk anschließend gewaschen wird, **dadurch gekennzeichnet, dass**

(i) der bei der Emulsionspolymerisation erhaltene Latex vor der Koagulation einen pH-Wert von mindestens 6 aufweist,
(ii) die Latexkoagulation unter Verwendung mindestens eines Salzes eines ein-, zwei- oder dreiwertigen Metalls, bei dem es sich optional um ein Chlorid handelt, als Fällmittel durchgeführt wird,
(iii) die Latexkoagulation in Gegenwart von Polyvinylacetat, welches gegebenenfalls teil- oder ganz verseift ist, als Co-Fällmittel erfolgt, und
(iv) die Latexkoagulation und/oder die Aufarbeitung des koagulierten Latex unter Einsatz von Chlorid-Ionen haltigem Wasser durchgeführt wird, sofern es sich bei dem Salz des ein-, zwei- oder dreiwertigen Metalls (ii) nicht um ein Chlorid handelt.

**9.** Verfahren gemäß Anspruch 8, wobei als Molekulargewichtsregler mindestens ein Alkylthiol eingesetzt wird, welches 12-16 Kohlenstoffatome und mindestens drei tertiäre Kohlenstoffatome enthält, wobei der Schwefel an eines dieser tertiären Kohlenstoffatome gebunden ist.

**10.** Verfahren gemäß Anspruch 8 oder 9, wobei die Emulsionspolymerisation diskontinuierlich oder kontinuierlich in einer Rührkesselkaskade durchgeführt wird.

**11.** Verfahren gemäß einem oder mehreren der Ansprüche 8 bis 10, wobei dem den Nitrilkautschuk enthaltenden Latex vor oder während der Koagulation ein oder mehrere Alterungsschutzmittel zugesetzt werden.

**12.** Verfahren gemäß einem oder mehreren der Ansprüche 8 bis 11, wobei für die Latexkoagulation Magnesiumchlorid, Magnesiumsulfat und/oder Magnesiumnitrat eingesetzt wird.

**13.** Verfahren gemäß einem oder mehreren der Ansprüche 8 bis 12, worin für die Latexkoagulation 0,1 bis 20 Gew. %, vorzugsweise 0,2 bis 15 Gew. % und besonders bevorzugt 0,5 bis 10 Gew.% mindestens eines Salzes bezogen auf Nitrilkautschuk eingesetzt werden.

**14.** Verfahren gemäß einem oder mehreren der Ansprüche 8 bis 13, wobei die Konzentration der Salzlösung des Salzes 0,3 bis 30 Gew. % beträgt.

**15.** Verfahren gemäß einem oder mehreren der Ansprüche 8 bis 14, wobei der zur Koagulation eingesetzte Latex eine Feststoffkonzentration im Bereich von 1 % bis 40 %, vorzugsweise im Bereich von 5 % bis 35 % und besonders bevorzugt im Bereich von 10 bis 30 Gew. % besitzt.

**16.** Verfahren gemäß einem oder mehreren der Ansprüche 8 bis 15, wobei die Wäsche des koagulierten Nitrilkautschuks bei einer Temperatur im Bereich von 15 bis 90°C und bevorzugt bei einer Temperatur im Bereich von 20 bis 80°C durchgeführt wird.

**17.** Verfahren gemäß einem oder mehreren der Ansprüche 8 bis 16, wobei das als Co-Fällmittel eingesetzte, gegebenenfalls teil- oder ganz verseifte Polyvinylacetat eine Viskosität im Bereich von 0,5 bis 200 cP, vorzugsweise von 1 bis 100 cP, besonders bevorzugt zwischen 3 bis 70 cP (DIN 53015) besitzt und eine Esterzahl im Bereich von 0 bis 240 (Houben Weyl, Methoden der organischen Chemie, 2. Auflage, Band 2, Analytische Methoden, 1953, S. 514 bis 515) aufweist.

**18.** Verfahren gemäß einem oder mehreren der Ansprüche 8 bis 17, wobei das als Co-Fällmittel eingesetzte, gegebenenfalls teil- oder ganz verseifte Polyvinylacetat in Form einer wässrigen Lösung eingesetzt wird, die eine Konzentration von 0,1 bis 10, bevorzugt von 0,5 bis 5 Gew. % bezogen auf den Nitrilkautschuk besitzt.

**19.** Verfahren gemäß einem oder mehreren der Ansprüche 8 bis 18, wobei der erhaltene Nitrilkautschuk anschließend (i) entweder nur einer Metathese-Reaktion oder (ii) einer Metathese-Reaktion und einer nachfolgenden Hydrierung oder (iii) nur einer Hydrierung unterzogen wird.

**20.** Optional hydrierte Nitrilkautschuke erhältlich gemäß dem Verfahren nach Anspruch 19.

**21.** Verwendung der Nitrilkautschuke gemäß einem oder mehreren der Ansprüche 1 bis 6 oder 20 zur Herstellung von vulkanisierbaren Mischungen.

**22.** Vulkanisierbare Mischung enthaltend mindestens einen Nitrilkautschuk gemäß einem oder mehreren der Ansprüche

1 bis 6 oder mindestens einen optional hydrierten Nitrilkautschuk gemäß Anspruch 20 mindestens einen Vernetzer und gegebenenfalls weitere Additive.

**23.** Verfahren zur Herstellung einer vulkanisierbaren Mischung gemäß Anspruch 22, indem man mindestens einen Nitrilkautschuk gemäß einem oder mehreren der Ansprüche 1 bis 6 oder mindestens einen optional hydrierten Nitrilkautschuk gemäß Anspruch 20, mindestens einen Vernetzer und gegebenenfalls weitere Additive mischt.

**24.** Verfahren zur Herstellung von Formteilen indem man eine vulkanisierbare Mischung gemäß Anspruch 22 in einem Formgebungsverfahren, bevorzugt durch Spritzguss, vulkanisiert.

**25.** Formteil erhältlich gemäß dem Verfahren nach Anspruch 24.

**26.** Formteil gemäß Anspruch 25, **dadurch gekennzeichnet, dass** es sich um eine Dichtung, eine Kappe, einen Schlauch oder eine Membran handelt, insbesondere um eine O-Ringdichtung, eine Flachdichtung, einen Wellendichtring, eine Dichtmanschette, eine Dichtkappe, einen Ölkühlerschlauch, einen Servolenkschlauch, einen Klimaanlagenschlauch, einen Thermoisolierschlauch, eine Membran für Hydrolager oder um eine Membran für eine Membranpumpe.

## Claims

**1.** Nitrile rubber which contains repeating units of at least one α,β-unsaturated nitrile, at least one conjugated diene and optionally one or more further copolymerizable monomers and has a chlorine content in the range from 4 to 25 ppm based on the nitrile rubber, determined in accordance with DIN EN 14582, method A.

**2.** Nitrile rubber according to Claim 1 having a chlorine content in the range from 5 to 23 ppm.

**3.** Nitrile rubber according to Claim 1 or 2 having repeating units of acrylonitrile, 1,3-butadiene and optionally one or more further copolymerizable monomers.

**4.** Nitrile rubber according to Claim 3 having repeating units of one or more α,β-unsaturated monocarboxylic or dicarboxylic acids, their esters or amides, preferably repeating units of an alkyl ester of an α,β-unsaturated carboxylic acid, in particular methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate or lauryl (meth)acrylate.

**5.** Nitrile rubber according to one or more of Claims 1 to 4 which has a Mooney viscosity (ML (1+4 @100°C)) of from 10 to 150 Mooney units, preferably from 20 to 100 Mooney units.

**6.** Nitrile rubber according to one or more of Claims 1 to 5 having a glass transition temperature in the range from -70°C to +10°C, preferably in the range from -60°C to 0°C.

**7.** Nitrile rubber according to one or more of Claims 1 to 6 which has 2,2,4,6,6-pentamethylheptane-4-thio and/or 2,4,4,6,6-pentamethylheptane-2-thio and/or 2,3,4,6,6-pentamethylheptane-2-thio and/or 2,3,4,6,6-pentamethylheptane-3-thio end groups.

**8.** Process for producing nitrile rubbers by emulsion polymerization of at least one α,β-unsaturated nitrile, at least one conjugated diene and optionally one or more further copolymerizable monomers in the presence of a molecular weight regulator, with the latex which is obtained in the polymerization and contains the nitrile rubber being subjected to coagulation and the coagulated nitrile rubber subsequently being washed, **characterized in that**

(i) the latex obtained in the emulsion polymerization has a pH of at least 6 before the coagulation,
(ii) the coagulation of the latex is carried out using at least one salt of a mono-, di- or trivalent metal, which is optionally a chloride, as precipitant,
(iii) the coagulation of the latex is carried out in the presence of polyvinyl acetate, which is optionally partially or fully hydrolysed, as coprecipitant, and
(iv) the coagulation of the latex and/or the work-up of the coagulated latex is carried out using water containing chloride ions if the salt of the mono-, di- or trivalent metal (ii) is not a chloride.

**9.** Process according to Claim 8, wherein at least one alkyl thiol which contains 12-16 carbon atoms and at least three tertiary carbon atoms, with the sulphur being bound to one of these tertiary carbon atoms, is used as molecular weight regulator.

**10.** Process according to Claim 8 or 9, wherein the emulsion polymerization is carried out batchwise or continuously in a cascade of stirred vessels.

**11.** Process according to one or more of Claims 8 to 10, wherein one or more ageing inhibitors are added to the latex containing the nitrile rubber before or during coagulation.

**12.** Process according to one or more of Claims 8 to 11, wherein magnesium chloride, magnesium sulphate and/or magnesium nitrate is used as precipitant for coagulation of the latex.

**13.** Process according to one or more of Claims 8 to 12, wherein from 0.1 to 20% by weight, preferably from 0.2 to 15% by weight and particularly preferably from 0.5 to 10% by weight, of at least one salt, based on nitrile rubber, is used for the coagulation of the latex.

**14.** Process according to one or more of Claims 8 to 13, wherein the concentration of the salt solution of the salt is from 0.3 to 30% by weight.

**15.** Process according to one or more of Claims 8 to 14, wherein the latex used for the coagulation has a solids concentration in the range from 1% to 40%, preferably in the range from 5% to 35% and particularly preferably in the range from 10 to 30% by weight.

**16.** Process according to one or more of Claims 8 to 15, wherein the washing of the coagulated nitrile rubber is carried out at a temperature in the range from 15 to 90°C, preferably at a temperature in the range from 20 to 80°C.

**17.** Process according to one or more of Claims 8 to 16, wherein the optionally partly or fully hydrolysed polyvinyl acetate used as coprecipitant has a viscosity in the range from 0.5 to 200 cP, preferably from 1 to 100 cP, particularly preferably between 3 to 70 cP (DIN 53015), and has an ester number in the range from 0 to 240 Houben Weyl, Methoden der organischen Chemie, 2nd edition, Volume 2, Analytische Methoden, 1953, pp. 514 to 515).

**18.** Process according to one or more of Claims 8 to 17, wherein the optionally partly or fully hydrolysed polyvinyl acetate used as coprecipitant is used in the form of an aqueous solution which possesses a concentration of 0.1% to 10%, preferably of 0.5% to 5%, by weight, based on the nitrile rubber.

**19.** Process according to one or more of Claims 8 to 18, wherein the nitrile rubber obtained is subsequently subjected to either (i) only a metathesis reaction or (ii) a metathesis reaction and a subsequent hydrogenation or (iii) only a hydrogenation.

**20.** Optionally hydrogenated nitrile rubbers which can be obtained by the process according to Claim 19.

**21.** Use of the nitrile rubbers according to one or more of Claims 1 to 6 or 20 for producing vulcanizable mixtures.

**22.** Vulcanizable mixture containing at least one nitrile rubber according to one or more of Claims 1 to 6 or at least one optionally hydrogenated nitrile rubber according to Claim 20, at least one crosslinker and optionally further additives.

**23.** Process for producing a vulcanizable mixture according to Claim 22 by mixing at least one nitrile rubber according to one or more of Claims 1 to 6 or at least one optionally hydrogenated nitrile rubber according to Claim 20, at least one crosslinker and optionally further additives.

**24.** Process for producing mouldings wherein a vulcanizable mixture according to Claim 22 is vulcanized in a shaping process, preferably by injection moulding.

**25.** Moulding obtainable by the process according to Claim 24.

**26.** Moulding according to Claim 25, **characterized in that** it is a seal, a cap, a hose or a diaphragm, in particular an O-ring seal, a flat seal, a corrugated sealing ring, a sealing sleeve, a sealing cap, an oil cooler hose, a servo control

hose, an air conditioner hose, a thermal insulation hose, a diaphragm for hydro bearings or a diaphragm for a diaphragm pump.

## Revendications

1. Caoutchouc de nitrile qui contient des motifs récurrents d'au moins un nitrile α,β-insaturé, d'au moins un diène conjugué et le cas échéant d'un ou de plusieurs autres monomères copolymérisables et qui présente une teneur en chlore dans la plage de 4 à 25 ppm par rapport au caoutchouc de nitrile, déterminée selon la norme DIN EN 14582, procédé A.

2. Caoutchouc de nitrile selon la revendication 1 présentant une teneur en chlore dans la plage de 5 à 23 ppm.

3. Caoutchouc de nitrile selon la revendication 1 ou 2, qui présente des motifs récurrents d'acrylonitrile, de 1,3-butadiène et le cas échéant d'un ou de plusieurs autres monomères copolymérisables.

4. Caoutchouc de nitrile selon la revendication 3, qui présente des motifs récurrents d'un ou de plusieurs acides monocarboxyliques ou dicarboxyliques α,ß-insaturés, de leurs esters ou amides, de préférence des motifs récurrents d'un ester alkylique d'un acide carboxylique α,ß-insaturé, en particulier de (méth)acrylate de méthyle, de (méth)acrylate d'éthyle, de (méth)acrylate de propyle, de (méth)acrylate de n-butyle, de (méth)acrylate de t-butyle, de (méth)acrylate d'hexyle, de (méth)acrylate de 2-éthlyhexyle, de (méth)acrylate d'octyle ou de (méth)acrylate de lauryle.

5. Caoutchouc de nitrile selon l'une ou plusieurs des revendications 1 à 4, qui présente une viscosité de Mooney (ML (1+4@100°C)) de 10 à 150, de préférence de 20 à 100 unités de Mooney.

6. Caoutchouc de nitrile selon l'une ou plusieurs des revendications 1 à 5 présentant une température de transition vitreuse dans la plage de -70°C à +10°C, de préférence dans la plage de -60°C à 0°C.

7. Caoutchouc de nitrile selon l'une ou plusieurs des revendications 1 à 6, qui présente des groupes terminaux 2,2,4,6,6-pentaméthylheptane-4-thio et/ou 2,4,4,6,6-pentaméthylheptane-2-thio et/ou 2,3,4,6,6-pentaméthylheptane-2-thio et/ou 2,3,4,6,6-pentaméthylheptane-3-thio.

8. Procédé pour la préparation de caoutchoucs de nitrile par polymérisation en émulsion d'au moins un nitrile α,ß-insaturé, d'au moins un diène conjugué et le cas échéant d'un ou de plusieurs autres monomères copolymérisables en présence d'un agent de régulation du poids moléculaire, le latex obtenu lors de la polymérisation, contenant le caoutchouc de nitrile étant soumis à une coagulation, et le caoutchouc de nitrile étant ensuite lavé, **caractérisé en ce que**

   (i) le latex obtenu lors de la polymérisation en émulsion présente, avant la coagulation, un pH d'au moins 6,
   (ii) la coagulation du latex est réalisée en utilisant au moins un sel d'un métal monovalent, divalent ou trivalent, pour lequel il s'agit éventuellement d'un chlorure, comme agent de précipitation,
   (iii) la coagulation du latex est réalisée en présence d'un poly(acétate de vinyle), qui est le cas échéant partiellement ou totalement saponifié, comme coagent de précipitation, et
   (iv) la coagulation du latex et/ou le traitement du latex coagulé est/sont réalisé (e) (s) en utilisant de l'eau contenant des ions chlorure, pour autant qu'il ne s'agisse pas, pour le sel du métal monovalent, divalent ou trivalent (ii), d'un chlorure.

9. Procédé selon la revendication 8, au moins un alkylthiol, qui contient 12-16 atomes de carbone et au moins trois atomes de carbone tertiaire, le soufre étant lié à un de ces atomes de carbone tertiaire, étant utilisé comme agent de régulation du poids moléculaire.

10. Procédé selon la revendication 8 ou 9, la polymérisation en émulsion étant réalisée de manière discontinue ou continue dans une cascade de cuves agitées.

11. Procédé selon l'une ou plusieurs des revendications 8 à 10, le latex contenant le caoutchouc de nitrile étant additionné, avant ou après la coagulation, d'un ou de plusieurs agents de protection contre le vieillissement.

**12.** Procédé selon l'une ou plusieurs des revendications 8 à 11, du chlorure de magnésium, du sulfate de magnésium et/ou du nitrate de magnésium étant utilisé pour la coagulation du latex.

**13.** Procédé selon l'une ou plusieurs des revendications 8 à 12, dans lequel on utilise, pour la coagulation du latex, 0,1 à 20% en poids, de préférence 0,2 à 15% en poids, de manière particulièrement préférée 0,5 à 10% en poids, par rapport au caoutchouc de nitrile, d'au moins un sel.

**14.** Procédé selon l'une ou plusieurs des revendications 8 à 13, la concentration en sel de la solution de sel étant de 0,3 à 30% en poids.

**15.** Procédé selon l'une ou plusieurs des revendications 8 à 14, le latex utilisé pour la coagulation présentant une concentration en solides dans la plage de 1% à 40%, de préférence dans la plage de 5% à 35% et de manière particulièrement préférée dans la plage de 10 à 30% en poids.

**16.** Procédé selon l'une ou plusieurs des revendications 8 à 15, le lavage du caoutchouc de nitrile coagulé étant réalisé à une température dans la plage de 15 à 90°C et de préférence à une température dans la plage de 20 à 80°C.

**17.** Procédé selon l'une ou plusieurs des revendications 8 à 16, le poly(acétate de vinyle), le cas échéant partiellement ou totalement saponifié, utilisé comme coagent de précipitation présentant une viscosité dans la plage de 0,5 à 200 cP, de préférence de 1 à 100 cP, de manière particulièrement préférée entre 3 à 70 cP (DIN 53015) et présentant un indice d'ester dans la plage de 0 à 240 (Houben Weyl, Methoden der organischen Chemie, 2ème édition, volume 2, Analytische Methoden, 1953, pages 514 à 515).

**18.** Procédé selon l'une ou plusieurs des revendications 8 à 17, le poly(acétate de vinyle), le cas échéant partiellement ou totalement saponifié, utilisé comme coagent de précipitation, étant utilisé sous forme d'une solution aqueuse qui présente une concentration de 0,1 à 10, de préférence de 0,5 à 5% en poids, par rapport au caoutchouc de nitrile.

**19.** Procédé selon l'une ou plusieurs des revendications 8 à 18, le caoutchouc de nitrile obtenu étant ensuite soumis soit (i) uniquement à une réaction de métathèse, soit (ii) à une réaction de métathèse et à une hydrogénation consécutive, soit (iii) uniquement à une hydrogénation.

**20.** Caoutchoucs de nitrile éventuellement hydrogénés, pouvant être obtenus selon le procédé selon la revendication 19.

**21.** Utilisation des caoutchoucs de nitrile selon l'une ou plusieurs des revendications 1 à 6 ou 20 pour la préparation de mélanges vulcanisables.

**22.** Mélange vulcanisable contenant au moins un caoutchouc de nitrile selon l'une ou plusieurs des revendications 1 à 6 ou au moins un caoutchouc de nitrile éventuellement hydrogéné selon la revendication 20, au moins un réticulant et le cas échéant d'autres additifs.

**23.** Procédé pour la préparation d'un mélange vulcanisable selon la revendication 22, en ce qu'on mélange au moins un caoutchouc de nitrile selon l'une ou plusieurs des revendications 1 à 6 ou au moins un caoutchouc de nitrile éventuellement hydrogéné selon la revendication 20, au moins un réticulant et le cas échéant d'autres additifs.

**24.** Procédé pour la production de pièces moulées en ce qu'on vulcanise un mélange vulcanisable selon la revendication 22 dans un procédé de façonnage, de préférence par moulage par injection.

**25.** Pièce moulée pouvant être obtenu selon le procédé selon la revendication 24.

**26.** Pièce moulée selon la revendication 25, **caractérisée en ce qu'**il s'agit d'un joint, d'un capuchon, d'un flexible ou d'une membrane, en particulier d'un joint annulaire, d'un joint plat, d'une bague d'étanchéité, d'une garniture d'étanchéité, d'un capuchon d'étanchéité, d'un flexible pour un radiateur d'huile, d'un flexible pour une direction assistée, d'un flexible pour une installation de conditionnement d'air, d'un flexible d'isolation thermique, d'une membrane pour un palier hydraulique ou d'une membrane pour une pompe à membrane.

**Figur 1/5:**

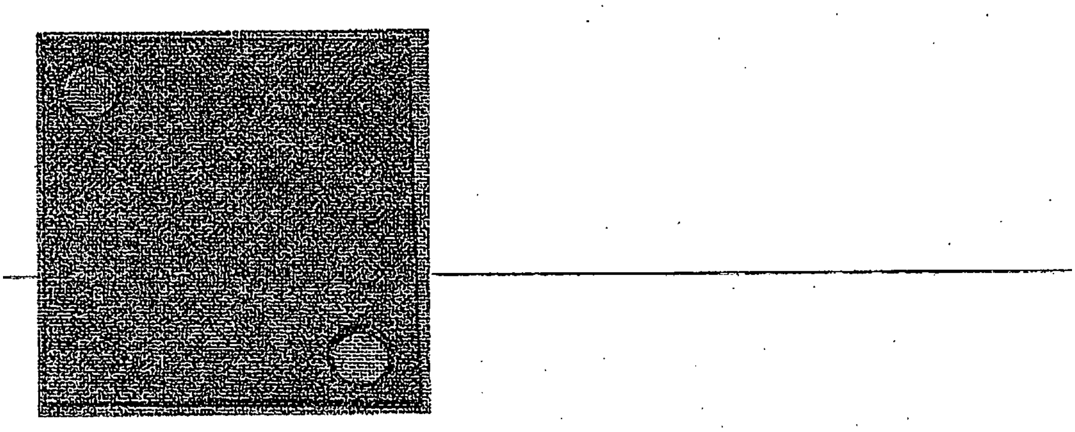

**Figur 2/5:**

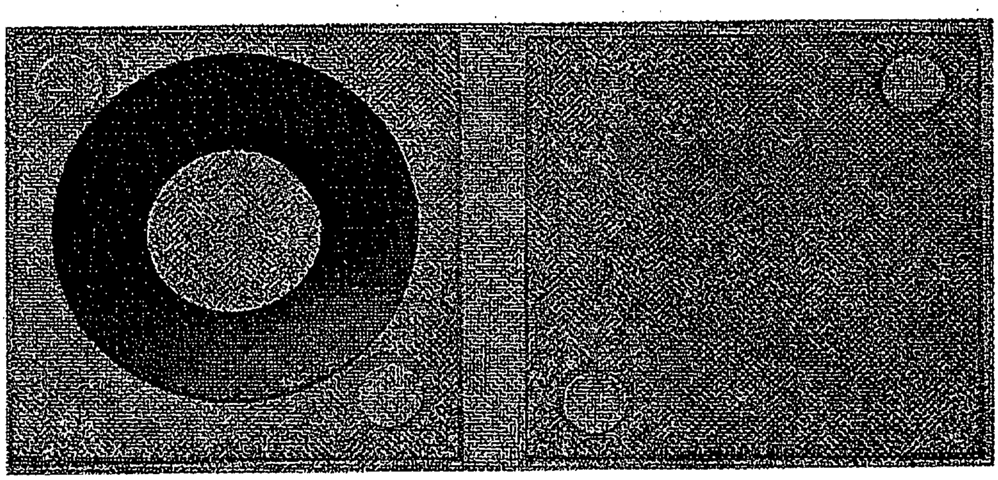

**Figur 3/5:**

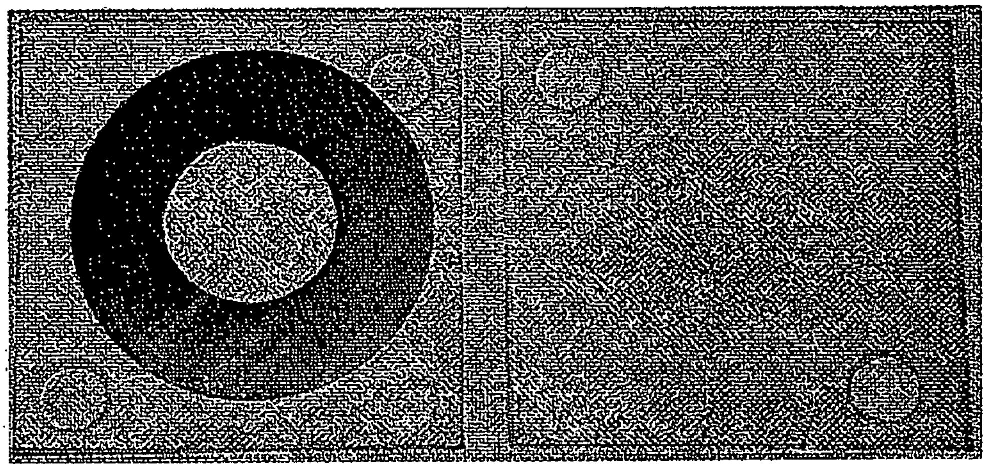

**Figur 4/5:**

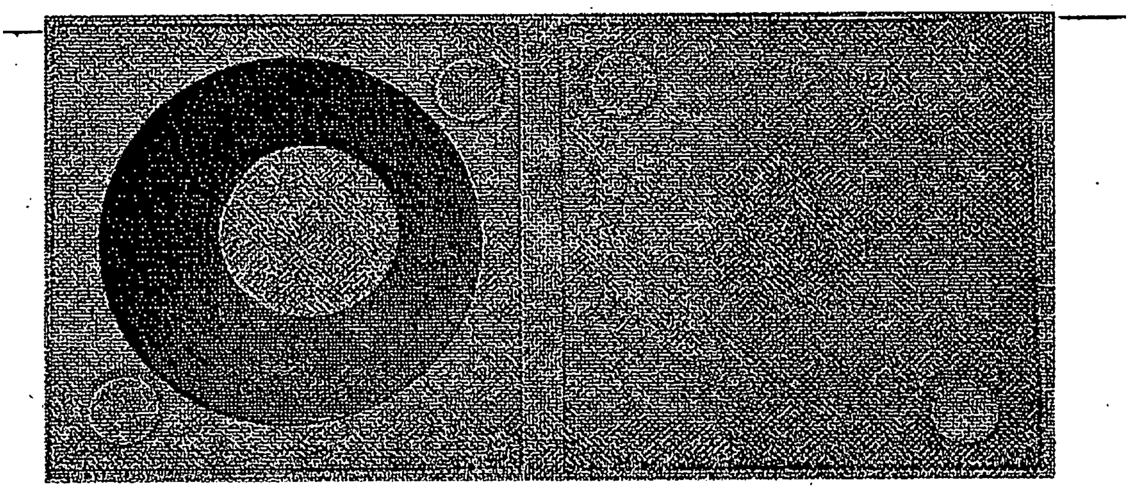

**Figur 5/5:**

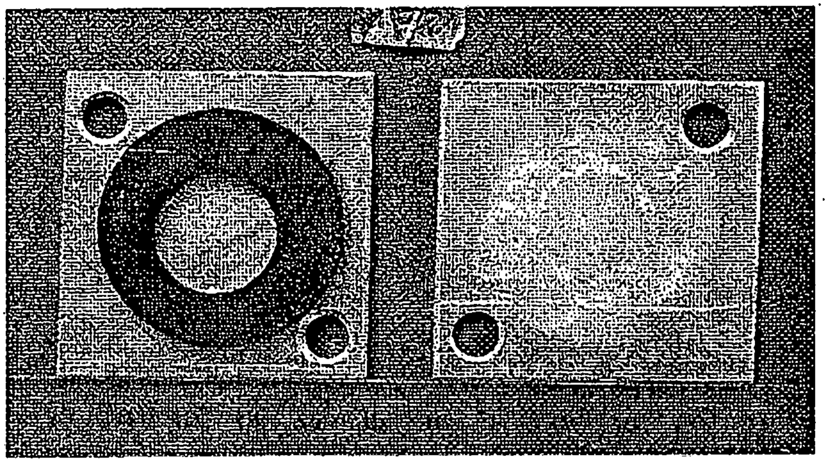

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DD 154702
- JP 48027902 A
- WO 6932322 A
- DE OS2332096 A
- DE OS2425441 A
- US 5708132 A
- DE OS2751786 A
- DE OS3043688 A
- US 2487263 A
- US 4920176 A
- EP 1369436 A
- EP 0692496 A
- EP 0779301 A
- EP 0779300 A
- DE 102007024011
- DE 102007024008
- DE 102007024010
- DE 102004013008
- JP 7316126 A
- JP 7316127 A
- JP 7316128 A
- GB 823823 A
- GB 823824 A
- DE 102007024009
- US 4826721 A
- WO 02100941 A
- WO 02100905 A
- US 3700637 A
- DE 2539132 A
- EP 0134023 A
- DE OS3541689 A
- DE OS3540918 A
- EP 0298386 A
- DE OS3529252 A
- DE OS3433392 A
- US 4464515 A
- US 4503196 A
- EP 0471250 A
- US 4631315 A
- DE 2332096 A


### In der Beschreibung aufgeführte Nicht-Patentliteratur


- **W. HOFMANN.** *Rubber Chem. Technol.,* 1963, vol. 36, 1
- Ullmann's Encyclopedia of Industrial Chemistry. VCH Verlagsgesellschaft, 1993, 255-261
- *Kolloid-Z.,* 1957, vol. 154
- **HOUBEN-WEYL.** Methoden der Org. Chemie. *Makromolekulare Stoffe 1,* 1961, 484
- **HOUBEN-WEYL.** Methoden der Org. Chemie. *Makromolekulare Stoffe 1,* 1961, 479
- **HOUBEN-WEYL.** Methoden der Org. Chemie. *Makromolekulare Stoffe 1,* 1961, 484, 485
- Ullmann's Encyclopedia of Industrial Chemistry. vol. 31, 345-355
- Ullmann's Encyclopedia of Industrial Chemistry. vol. 13, 75-108
- **URANECK, C. A.** Molecular weight control of elastomers prepared by emulsion polymerization. *Rubber Chemistry and Technology,* 1976, vol. 49 (3), 610-49
- **D. C. ELACKIEY.** Emulsion Polymerization, Theory and Practice. Applied Science Publishers Ltd London, 1975, 329-381
- Ullmann's Encyclopädie der Technischen Chemie. Verlag Chemie, 1980, vol. 19, 374-378
- Methoden der organischen Chemie. **HOUBEN-WEYL.** Analytische Methoden. Georg-Thieme-Verlag, 1953, vol. 2, 514-115
- Analytische Methoden. Houben Weyl: Methoden der Organischen Chemie. Georg Thieme Verlag, 1963, vol. 2